# EUROPÄISCHE PATENTSCHRIFT

(11) **EP 3 481 699 B1**
(45) Veröffentlichungstag und Bekanntmachung des Hinweises auf die Patenterteilung: **17.06.2020**
(21) Anmeldenummer: 17735126.9
(22) Anmeldetag: 04.07.2017
(51) Int. Cl.: B21K 1/76, B62D 3/12

(54) **ZAHNSTANGE UND EIN VERFAHREN ZUR HERSTELLUNG EINER ZAHNSTANGE FÜR EIN KRAFTFAHRZEUG**
TOOTHED RACK AND METHOD FOR PRODUCING A TOOTHED RACK FOR A MOTOR VEHICLE
CRÉMAILLÈRE ET PROCÉDÉ DE FABRICATION D'UNE CRÉMAILLÈRE POUR UN VÉHICULE AUTOMOBILE

(30) Priorität: 06.07.2016 DE 102016212307
(43) Veröffentlichungstag der Anmeldung: 15.05.2019
(73) Patentinhaber: thyssenkrupp Presta AG, 9492 Eschen (LI); thyssenkrupp AG, 45143 Essen (DE)
(72) Erfinder: HECK, Hubert, 40629 Düsseldorf (DE); BADER, Reinhard, 6822 Satteins (AT); ECKSTEIN, Ralf, 9493 Mauren (LI)
(74) Vertreter: thyssenkrupp Intellectual Property GmbH
(86) Internationale Anmeldenummer: PCT/EP2017/066622
(87) Internationale Veröffentlichungsnummer: WO 2018/007377

(56) Entgegenhaltungen:
- EP-A1- 1 316 492
- DE-A1- 2 816 222
- DE-A1-102012 011 509

## Beschreibung

### Stand der Technik

Die Erfindung betrifft ein Verfahren zur Herstellung einer Zahnstange für ein Lenkgetriebe eines Kraftfahrzeugs, die mindestens einen Verzahnungsabschnitt mit einer Verzahnung und mindestens einen Schaftabschnitt mit zumindest einem Gewindeabschnitt mit einem koaxialen Gewinde aufweist, welches eine Gewindelänge in axialer Richtung hat, wobei separate Segmente, umfassend zumindest ein jeweils stangenförmiges Zahnsegment und ein Schaftsegment, bereitgestellt, auf einer gemeinsamen Längsachse ausgerichtet und an einer Fügestelle miteinander verbunden werden.

Weiterhin betrifft die Erfindung eine Zahnstange für ein Lenkgetriebe eines Kraftfahrzeugs, die mindestens einen Verzahnungsabschnitt mit einer Verzahnung und mindestens einen Schaftabschnitt mit einem Gewinde aufweist.

In einer Fahrzeuglenkung wird ein Lenkbefehl über das Lenkrad als Drehbewegung in die Lenkwelle eingebracht, auf der ein Ritzel angebracht ist, welches mit einer Verzahnung einer Zahnstange in einem Lenkgetriebe kämmt. Die Zahnstange ist im Lenkgetriebe in axialer Richtung, d.h. in Richtung ihrer Längsachse verschiebbar gelagert, so dass eine Drehung des Ritzels in eine translatorische Bewegung der Zahnstange in deren axialer Längsrichtung umgesetzt wird. An der Zahnstange sind Spurstangen befestigt, welche mit den Achsschenkeln der zu lenkenden Räder verbunden sind, wo die translatorische Bewegung der Zahnstange in einen Lenkeinschlag umgesetzt wird.

Die Zahnstange weist mindestens einen Verzahnungsabschnitt auf, in dem die Verzahnung zum Eingriff des Ritzels über eine vorgegebene axiale Länge ausgebildet ist. Bei einer gattungsgemäßen Zahnstange schließt sich in Richtung der Längsachse an den Verzahnungs-bereich mindestens ein Schaftabschnitt an, der ähnlich wie der Verzahnungsabschnitt in Längsrichtung stangenförmig, bevorzugt mit einer zylindrischen Grundform ausgebildet ist und mindestens einen Gewindeabschnitt aufweist. Der Gewindeabschnitt bildet eine Gewindespindel mit einem Außengewinde, welches sich in Längsrichtung über die Gewindelänge erstreckt. Zur Einkopplung einer Hilfskraft zur Lenkunterstützung wird auf dem Gewindeabschnitt eine Spindelmutter angeordnet, die von einem Hilfsantrieb motorisch um die Längsachse drehend antreibbar ist. Dadurch wird ein Spindeltrieb gebildet, über den zusätzlich zu der manuell über das Ritzel in den Verzahnungsabschnitt eingebrachten Lenkkraft eine diese unterstützende Hilfskraft in Längsrichtung auf die Zahnstange ausgeübt werden. Der Spindeltrieb ist in einer verbreiteten Bauform als Kugelgewindetrieb (KGT) ausgebildet, bei dem die Gewindegänge als Laufrillen für Kugeln ausgebildet sind, die zwischen dem Gewinde und der Spindelmutter reibungsarm umlaufen. Der Schaftabschnitt kann neben dem Gewindeabschnitt einen oder mehrere weitere Funktionsabschnitte aufweisen, beispielsweise einen Lagerabschnitt, der beispielsweise zumindest teilweise zylindrisch ausgebildet sein kann zur translatorischen Lagerung der Zahnstange in Längsrichtung. An den freien, in Längsrichtung voneinander abgewandten Enden können an dem Verzahnungs- und Schaftabschnitt jeweils Verbindungselemente zur Verbindung mit den Spurstangen angebracht sein, beispielsweise Gewindezapfen oder dergleichen.

Um die Materialeigenschaften an die im Betrieb auftretenden Beanspruchungen besser an-passen zu können und die Fertigung zur Ausbildung der Funktionsbereiche zu optimieren, ist es im Stand der Technik bekannt, den Verzahnungsabschnitt zunächst auf einem Zahnsegment auszubilden, und den Schaftabschnitt mit dem Gewinde als davon separates Schaftsegment bereitzustellen. Durch Materialwahl, Vergütungsprozesse, beispielsweise durchgehendes oder partielles thermisches Härten, und prozessoptimierte Bearbeitungsverfahren, wie beispielsweise Warm- oder Kaltumformen, Fräsen, Schleifen oder dergleichen, können die zunächst separaten Segmente hinsichtlich ihrer jeweiligen Funktionalität ausgestaltet werden. Anschließend werden das Zahnsegment und das Schaftsegment koaxial auf einer gemeinsamen Längsachse ausgerichtet und an ihren axial gegeneinander gerichteten stirnseitigen Enden, den Verbindungsenden, an einer Fügestelle miteinander verbunden. Diese Bauart wird daher auch als gebaute Zahnstange bezeichnet. Die Verbindung der Segmente kann mittels Verbindungselementen erfolgen, wie beispielsweise in der DE 10 2007 018 919 A1 beschrieben, oder auch durch stoffschlüssige Fügeverfahren, bevorzugt durch Verschweißen, wie in der JP2006 46423 A oder der DE 10 2013 007 072 A1 beschrieben. Gegebenenfalls können weitere Segmente mit dem Schaft und/oder Zahnsegment verbunden werden. JP2006 46423 A wird als nächstliegender Stand der Technik angesehen und zeigt die Präambel der unabhängigen Ansprüche.

Bei der Herstellung einer gebauten Zahnstange durchlaufen die Segmente, insbesondere das Verzahnungs- und Schaftsegment, jeweils mehrere Bearbeitungsschritte. Insbesondere die Fertigung des Gewindeabschnitts auf dem Schaftsegment ist relativ aufwendig. Bisher werden von einem stangenförmigen, bevorzugt zylindrischen oder rohrförmigem Schaft-Rohmaterial zunächst Abschnitte abgelängt, die jeweils einzeln weiter bearbeitet werden. Die Gewindegänge des Gewindeabschnitts werden mit spanenden Verfahren für jedes einzelne Schaftsegment in das zylindrische Rohmaterial geschnitten, die Feinbearbeitung mit der für einen KGT-Gewindetrieb erforderlichen Oberflächenqualität und Genauigkeit kann durch Schleifen, Polieren oder Finishen erreicht werden. Das Gewindeschneiden und Schleifen erfordert durch das Umspannen und Einrichten der Gewindeschneid- und Schleifmaschinen für jedes einzelne Schaftsegment bisher einen entsprechend aufwendigen und zeitintensiven Fertigungsprozess.

Angesichts der vorangehend erläuterten Problematik ist es eine Aufgabe der vorliegenden Erfindung, den Fertigungsprozess von gebauten Zahnstangen effizienter zu gestalten, insbesondere hinsichtlich der Bereitstellung von Schaftsegmenten mit Gewindeabschnitt. Ebenfalls soll eine verbesserte Zahnstange bereitgestellt werden.

### Darstellung der Erfindung

Gelöst wird die Aufgabe durch ein Verfahren entsprechend dem Patentanspruch 1, sowie durch eine Zahnstange entsprechend Patentanspruch 12. Vorteilhafte Weiterbildungen ergeben sich aus den jeweiligen Unteransprüchen.

Zur Lösung der vorgenannten Problematik wird erfindungsgemäß ein Verfahren mit folgenden Schritten vorgeschlagen:
- Bereitstellen eines Schaft-Rohmaterialstücks mit einer Stücklänge von einem Mehrfachen der Schaftsegmentlänge,
- Erzeugen eines in Längsrichtung durchgehenden Gewindes auf dem Schaft-Rohmaterialstück über ein Mehrfaches der Gewindelänge zur Herstellung eines Gewinde-Halbzeugs,
- Ablängen eines Gewindesegments von dem Gewinde-Halbzeug,
- Bereitstellen eines Zahnsegments,
- Fügen des Gewindesegments mit dem Zahnsegment.

Erfindungsgemäß wird der Fertigungsprozess für die Herstellung einer gebauten Zahnstange dadurch optimiert, dass das Gewinde des Gewindeabschnitts, welches im Stand der Technik an einem längenmäßig konfektionierten Schaftsegment-Rohling ausgebildet wird, zumindest teilweise in einem vorgelagerten Verfahrensschritt bereits an dem Schaft-Rohmaterial ausgebildet wird. Das Schaft-Rohmaterial kann dabei jeweils als Schaft-Rohmaterialstück zur Verfügung gestellt werden, beispielsweise in Form einer langen Stange aus Rund- oder Profilmaterial, oder als Hohlprofil in Form von langem Rohrmaterial, bevorzugt aus Stahl. Die axiale Länge des zylindrischen Schaft-Rohmaterialstücks wird allein durch das Fertigungsverfahren des Rohmaterials bestimmt, welches in der Regel in Längsrichtung durchlaufende Bearbeitungsprozesse wie Stranggießen, Pressen, Walzen, Schälen, Ziehen und dergleichen vorsieht. Prinzipiell kann dadurch ein Schaft-Rohmaterialstück eine beliebige Stücklänge haben, die jedoch in der Praxis aus Logistik- und Handhabungsgründen in der Regel in der Größenordnung von einigen Metern vorgegeben wird, beispielsweise 2 bis 10 Meter.

Die Stücklänge eines derartigen Schaft-Rohmaterialstücks ist ein Mehrfaches der Schaft-segmentlänge, welche im Wesentlichen durch die Länge des Schaftsegments in axialer Längsrichtung gemessen von der Fügestelle bis zum freien Ende gegeben ist und in der Praxis meist unter einem Meter liegt, typischerweise je nach Ausführung des Lenkgetriebes beispielsweise zwischen 0,1 und 0,5 Meter betragen kann.

Im Stand der Technik werden von dem Schaft-Rohmaterial Abschnitte entsprechend der Schaftsegmentlänge abgelängt, auf denen in anschließenden Fertigungsschritten das Gewinde des Gewindeabschnitts erzeugt wird, beispielsweise durch Gewindeschneiden und Schleifen. Durch die hohen Anforderungen an ein Kugelgewindetrieb- (KGT-) Gewinde entsteht wie erwähnt ein hoher Fertigungsaufwand.

Erfindungsgemäß erfolgt die Herstellung des Gewindes mit den durch die jeweilige Hilfskraftunterstützung vorgegebenen Spezifikationen wie Gewindesteigung, Gewindeprofil, Oberflächenqualität und dergleichen unter Einhaltung der geforderten Toleranzen bereits am Schaftabschnitt-Rohmaterial. Das erfindungsgemäße Verfahren sieht hierzu die die durchgehende Bearbeitung des Schaft-Rohmaterialstücks vor, bevorzugt über dessen gesamte Länge. Dadurch wird ein Schaftsegment-Halbzeug mit in Längsrichtung durchgehendem Gewinde zur Verfügung gestellt, welches als Gewinde-Halbzeug bezeichnet wird.

Aus dem erfindungsgemäßen Gewinde-Halbzeug können durch einfaches Ablängen Schaftsegmente erzeugt werden, welche bereits einen Gewindeabschnitt aufweisen. Hierzu werden Teilstücke mit eine axialen Länge von dem Gewinde-Halbzeug abgetrennt, die der Schaftsegmentlänge entspricht, die ihrerseits in der Regel im Wesentlichen der geforderten Schaftabschnittlänge entspricht, gegebenenfalls unter Zugabe einer zusätzlichen Bearbeitungslänge. Die zusätzliche Bearbeitungslänge kann für eine gegebenenfalls erforderliche Vorbereitung der Fügefläche erforderlich sein, oder eine Verkürzung durch das eingesetzte Fügeverfahren berücksichtigen und ausgleichen, beispielsweise eine axiale Stauchung bei einem thermischen Fügeverfahren wie Reibschweißen oder dergleichen. Dadurch ist erfindungsgemäß die Stücklänge des Schaft-Rohmaterialstücks immer auch ein Mehrfaches der Schaftabschnitt- bzw. Gewindelänge.

In nachfolgenden Verfahrensschritten wird ein Zahnsegment bereitgestellt und mit dem erfindungsgemäß durch Ablängen von dem Gewinde-Halbzeug erzeugten Schaftsegment auf einer gemeinsamen Längsachse ausgerichtet werden. Das bedeutet, dass die Schaftsegment-Achsen koaxial oder parallel versetzt zueinander ausgerichtet werden. Anschließend werden die dabei einander gegenüberliegenden, bezüglich der Längsachse stirnseitigen Fügeflächen von Verzahnungs- und Schaftsegment mittels eines Fügeverfahrens zusammengefügt, wobei eine Fügestelle ausgebildet wird, wobei die Segmente nach dem Fügen eine gemeinsame Längsachse besitzen. Prinzipiell sind Fügeverfahren geeignet, welche durch Form-, Kraft- und/oder Stoffschluss eine dauerhafte, feste Verbindung ermöglichen. Bevorzugt können Schweißverfahren eingesetzt werden, wie beispielsweise Reibschweißen, was eine rationelle Fertigung und eine zuverlässige Verbindung gewährleistet.

Eine vorteilhafte Ausgestaltung des erfindungsgemäßen Verfahrens ist, dass auf dem Schaft-Rohmaterialstück das Gewinde in einem kontinuierlichen axialen Durchlaufverfahren erzeugt wird. Dabei handelt es sich um einen effizienten Durchlauf-Bearbeitungsprozess, bei dem das Gewinde als in axialer Richtung durchgehendes Außengewinde in die äußere Mantelfläche des Schaft-Rohmaterials eingebracht wird. Bevorzugt kann die Bearbeitung über die Gesamtlänge des Schaft-Rohmaterialstücks, die ein Vielfaches der Schaftsegmentläge betragen kann, kontinuierlich beim Durchgang durch eine Bearbeitungsstation oder eine Fertigungsstraße mit mehreren hintereinander durchlaufenen Bearbeitungsstationen erfolgen. Auf diese Weise kann in einem einzigen Arbeitsschritt ein Schaftsegment-Halbzeug zur Verfügung gestellt werden, welches sich über ein Mehrfaches der Schaftsegmentlänge bzw. Schaftabschnittlänge erstreckt, wobei zeitraubendes Umspannen und Ausrichten wegfällt.

Vorzugsweise weist das Gewinde zumindest eine Kugellaufbahn eines KGT auf. Dabei ist das Profil der Gewindegänge als Laufrille für die Kugeln eines KGT optimiert, beispielsweise durch ein gotisches Profil, welches eine definierte Auflage einer Kugel an jeweils zwei definierten Punkten ermöglicht.

Das erfindungsgemäße Verfahren kann dahingehend weitergebildet werden, dass das Gewinde gewirbelt wird. Beim Wirbeln, auch als Durchlaufwirbeln bezeichnet, handelt es sich um ein Durchlaufverfahren zum Erzeugen von Gewinde auf einem zylindrischen Rohling. Dabei werden durch einen mit hoher Geschwindigkeit rotierenden, exzentrisch schräg zur Längsachse angeordneten Wirbelring mit innenliegenden Schneiden Gewindegänge außen in das Schaftabschnitt-Rohmaterial eingeschnitten, wobei gleichzeitig das Rohmaterial um die Längsachse gedreht und mit einem axialen Vorschub entsprechend der Gewindesteigung kontinuierlich durch den Wirbelring hindurchgeführt wird. Daraus resultiert eine besonders rationelle Fertigung des Gewinde-Halbzeugs. Mittels Wirbeln erzeugte Gewinde haben den weiteren Vorteil, dass eine optimal an die Verwendung in einem KGT angepasste Geometrie und Oberflächenbeschaffenheit realisiert werden kann, was einem geräusch- und verschleißarmen Lauf des KGT zugutekommt. Es ist möglich, das Gewinde in einem einzigen Durchgang zu Wirbeln, wobei die Qualität des Gewindes die Anforderungen im KGT bereits erfüllt, so dass eine weitere Bearbeitung entfallen kann.

Alternativ oder zusätzlich können andere, spanende oder nichtspanende Fertigungsverfahren zur Erzeugung des erfindungsgemäß über die Länge des Schaft-Rohmaterials durchgehenden Gewindes eingesetzt werden, vorzugsweise Durchlaufverfahren, beispielsweise Fräsen, Räumen, Rollieren und dergleichen, und gegebenenfalls Schleifen oder dergleichen zur Fein- bzw. Endbearbeitung.

In nachfolgenden Verfahrensschritten zur Herstellung einer Zahnstange wird ein Zahnsegment bereitgestellt und mit dem erfindungsgemäß durch Ablängen von dem Schaftsegment-Halbzeug erzeugten Schaftsegment auf der gemeinsamen Längsachse ausgerichtet. Anschließend werden die dabei einander gegenüberliegenden, bezüglich der Längsachse stirnseitigen Fügeflächen von Verzahnungs- und Schaftsegment mittels eines Fügeverfahrens zusammengefügt, wobei eine Fügestelle ausgebildet wird. Prinzipiell sind Fügeverfahren geeignet, welche durch Form-, Kraft- und/oder Stoffschluss eine dauerhafte, feste Verbindung ermöglichen. Bevorzugt können Schweißverfahren eingesetzt werden, wie beispielsweise Reibschweißen, was eine rationelle Fertigung und eine zuverlässige Verbindung gewährleistet.

Es ist vorteilhaft, dass das Schaftabschnitt-Rohmaterialstück als warm- und/oder kaltgeformter und/oder spanend bearbeiteter Materialabschnitt bereitgestellt wird. Beispielsweise kann das Rohmaterialstück als formgewalzte Stange aus Vollmaterial bereitgestellt werden, oder auch als geschweißtes oder nahtloses Rohr. Vor dem Durchlaufschleifen kann das Schaftabschnitt-Rohmaterialstück zur Erzeugung einer bestimmten Form, Oberflächen- oder Materialbeschaffenheit mittels geeigneter Verfahren zudem spanend und/oder nichtspanend umgeformt werden, beispielsweise durch Maßwalzen, Pressen, Ziehen, Richten, Schälen oder zusätzliche bzw. alternative Bearbeitungsverfahren.

Es ist weiterhin denkbar und möglich, dass das Schaftabschnitt-Rohmaterialstück vor dem Durchlaufschleifen und vor dem Einbringen des Gewindes thermisch behandelt wird. Durch thermische Behandlung kann das Rohmaterial beispielsweise durchgehend oder partiell gehärtet werden, um es optimal an die im Betrieb zu erwartenden Belastungen anzupassen. Dabei hat das erfindungsgemäße Durchlaufschleifen den Vorteil, dass gehärtete Oberflächen mit hoher Oberflächengüte und Maßhaltigkeit rationell feinbearbeitet werden können.

Ein weiterer Verfahrensschritt kann beinhalten, dass durch das Ablängen zumindest eine stirnseitige Endfläche des Schaftsegments zur Ausbildung einer Fügefläche bereitgestellt wird.

Ein weiterer Verfahrensschritt kann beinhalten, dass nach dem Ablängen zumindest eine stirnseitige Endfläche des Schaftsegments zur Ausbildung einer Fügefläche bearbeitet wird. Durch entsprechende spanende oder plastische Bearbeitungsverfahren kann das zur Verbindung mit dem Verzahnungselement vorgesehene Verbindungsende für das zum Einsatz kommende Fügeverfahren vorbereitet werden, beispielsweise kann eine an ein Schweißverfahren angepasste Oberflächenbeschaffenheit und/oder -form hergestellt werden, oder eine anderweitige Anpassung an die korrespondierende Fügefläche des Verzahnungselements vorgenommen werden.

Bevorzugt werden das Zahnsegment und das Schaftsegment miteinander verschweißt, vorzugsweise durch Reibschweißen. Beim Rotations-Reibschweißen werden die miteinander zu fügenden Segmente auf ihrer gemeinsamen Längsachse ausgerichtet, relativ zueinander um diese Längsachse in Drehung versetzt und dabei in Längsrichtung mit ihren gegeneinander gerichteten Endflächen, welche die Fügeflächen bilden bzw. aufweisen, gegeneinander angepresst. Die dabei entstehende Reibungswärme bewirkt ein Aufschmelzen der Fügeflächen, so dass eine stoffschlüssige Schweißverbindung zustande kommt.

Es ist möglich, dass zumindest ein weiteres Funktionssegment bereitgestellt und mit dem Zahnsegment und/oder dem Schaftsegment gefügt wird. Ein weiteres Funktionssegment kann beispielsweise einen Verbindungsabschnitt zum Anschluss des Verzahnungs- oder Schaftabschnitts an eine Spurstange umfassen, oder auch einen in axialer Richtung zwischen dem Verzahnungs- und Schaftsegment eingefügtes Zwischenabschnitt. Zur Befestigung eines Funktionssegments können dieselben Fügetechniken zum Einsatz kommen, wie für Verzahnungs- und Schaftsegmente vorangehend beschrieben. Ebenso wie diese Segmente können ein oder mehrere Funktionssegmente gemäß dem erfindungsgemäßen Verfahren vor dem Fügen bearbeitet werden.

Gelöst wird die Aufgabe durch eine Zahnstange für ein Lenkgetriebe eines Kraftfahrzeugs, die mindestens einen Verzahnungsabschnitt mit einer Verzahnung und mindestens einen Schaftabschnitt mit einem Gewinde aufweist, wobei das Gewinde sich über die gesamte Schaftabschnitts-Länge erstreckt.

Bevorzugt weist das durchgehende Gewinde eine Steigung mit einem Wert zwischen 5mm und 40mm auf. Besonders bevorzugt weist die Steigung einen Wert zwischen 5mm und 10mm auf. Bevorzugt ist das Gewinde als Laufbahn für Wälzkörper, beispielsweise Kugeln, ausgebildet und kann ein gotisches Querschnittsprofil aufweisen.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Lenksystem für ein Kraftfahrzeug,
- Figur 2: eine erfindungsgemäß hergestellte Zahnstange,
- Figur 3: ein Schaftsegment-Halbzeug beim Durchlaufhärten,
- Figur 4: ein Schaftsegment-Halbzeug beim Durchlaufschleifen,
- Figur 5: ein Schaftsegment-Halbzeug beim Durchlaufwirbeln zur Herstellung eines Gewinde-Halbzeugs,
- Figur 6: Ablängen eines Gewindesegments von einem Gewinde-Halbzeug gemäß Figur 5,
- Figur 7: ein Verzahnungsabschnitt-Halbzeug beim Durchlaufschleifen,
- Figur 8: ein Verzahnungsabschnitt-Halbzeug beim Durchlaufschälen,
- Figur 9: Ablängen eines Zahnsegment-Rohlings von einem Zahnsegment-Halbzeug gemäß Figur 7 oder Figur 8,
- Figur 10: eine schematische Ansicht quer zur Längsachse eines Gesenks in geöffnetem Zustand, vor der Umformung,
- Figur 11: das Gesenk wie in Figur 10 in einem nachfolgenden Verfahrensschritt in teilweise geschlossenem Zustand,
- Figur 12: das Gesenk wie in Figur 11 in einem nachfolgenden Verfahrensschritt in geschlossenem Zustand,
- Figur 13: das Gesenk wie in Figur 12 in einem nachfolgenden Verfahrensschritt in wieder geöffnetem Zustand, nach der Umformung,
- Figur 14: das fertige Zahnsegment gemäß Figur 13 in einer Ansicht quer zur Längsrichtung in Richtung der Breite der Verzahnung (in Richtung der Verzahnungsbreite),
- Figur 15: das fertige Zahnsegment gemäß Figur 13 in einer Ansicht quer zur Längsrichtung auf die Verzahnung (in Richtung der Höhe),
- Figur 16: ein Querschnitt X1-X1 durch das Gesenk gemäß Figur 11,
- Figur 17: ein Querschnitt X2-X2 durch das Gesenk gemäß Figur 12,
- Figur 18: ein Querschnitt X3-X3 durch das Gesenk gemäß Figur 13,
- Figur 19: ein Querschnitt Y3-Y3 durch das Gesenk gemäß Figur 13,
- Figur 20: ein Zahnsegment in einer zweiten Ausführung in einer Ansicht quer zur Längsrichtung in Richtung der Breite der Verzahnung, analog zu Figur 19,
- Figur 21: ein Querschnitt C-C durch das Gesenk gemäß Figur 20,
- Figur 22: ein Zahnsegment in einer dritten Ausführung in einer Ansicht quer zur Längs-richtung in Richtung der Breite der Verzahnung, analog zu Figur 19,
- Figur 23: ein Querschnitt D-D durch das Gesenk gemäß Figur 22,
- Figur 24: ein Zahnsegment beim Durchlaufhärten,
- Figur 25: ein Gewindesegment und ein Zahnsegment vor dem Einspannen in eine Spannvorrichtung,
- Figur 26: ein Gewindesegment und ein Zahnsegment in einer Spannvorrichtung vor dem Reibschweißen,
- Figur 27: ein Gewindesegment und ein Zahnsegment in einer Spannvorrichtung nach dem Reibschweißen,
- Figur 28: Schematisiertes Härteprofil der erfindungsgemäßen Reibschweißverbindung,
- Figur 29: ein Zahnsegment in perspektivischer Darstellung,
- Figur 30: eine gebaute Zahnstange in einer alternativen Ausführungsform,
- Figur 31: eine Zahnstange in einer weiteren alternativen Ausführungsform mit V-Rücken,
- Figur 32: eine Zahnstange gemäß Figur 31 in einer perspektivischen Schnittdarstellung,
- Figur 33: eine Zahnstange mit V-Profil in einer alternativen Ausführungsform,
- Figur 34: Querschnitt durch ein Gesenk mit eingelegtem Halbzeug vor dem Schmieden analog der Figur 16,
- Figur 35: Querschnitt durch ein Gesenk gemäß Figur 34 nach dem Schmieden,
- Figur 36: eine erfindungsgemäß hergestellte Zahnstange in einer weiteren Ausführungsform in perspektivischer Darstellung,
- Figur 37: Zahnstange gemäß Figur 36 in einer Ansicht quer zur Längsrichtung in Richtung der Breite der Verzahnung,
- Figur 38: Zahnstange in einer alternativen Ausführungsform ähnlich Figur 37.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

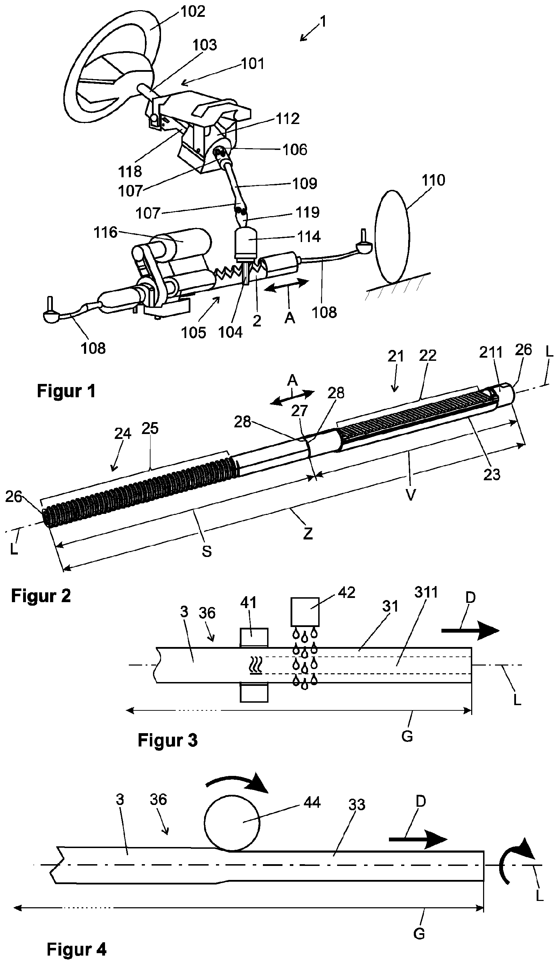

Figur 1 zeigt eine schematische perspektivische Darstellung einer Kraftfahrzeuglenkung 1, wobei in eine Lenkwelle 101 vom Fahrer über ein Lenkrad 102 ein Drehmoment als Lenkmoment eingebracht werden kann. Das Lenkmoment wird über die Lenkwelle 101 auf ein Lenkritzel 104 übertragen, welches mit einer Zahnstange 2 kämmt, die dann ihrerseits über entsprechende Spurstangen 108 den vorgegebenen Lenkwinkel auf die lenkbaren Räder 110 des Kraftfahrzeugs überträgt. Zusammen mit der Zahnstange 2 bildet das Lenkritzel 104 ein Lenkgetriebe 105. Das Lenkgetriebe 105 weist ein hier nicht dargestelltes Gehäuse auf, in dem das Lenkritzel 104 drehbar und die Zahnstange 2 in der Längsrichtung A, auch axiale Richtung A genannt, in beide Richtungen längsverschieblich gelagert ist, was mit dem Doppelpfeil angedeutet ist.

Eine elektrische und/oder hydraulische Hilfskraftunterstützung kann in Form einer Hilfskraft-unterstützung 112, alternativ auch einer Hilfskraftunterstützung 114 beziehungsweise 116, entweder mit der Lenkwelle 1, dem Lenkritzel 104 beziehungsweise der Zahnstange 2 gekoppelt sein. Die jeweilige Hilfskraftunterstützung 112, 114 oder 116 trägt ein Hilfsdreh-moment in die Lenkwelle 1, das Lenkritzel 104 und/oder eine Hilfskraft in die Zahnstange 2 ein, wodurch der Fahrer bei der Lenkarbeit unterstützt wird. Die drei unterschiedlichen in der Figur 1 dargestellten Hilfskraftunterstützungen 112, 114 und 116 zeigen alternative Positionen für deren Anordnung. Üblicherweise ist nur eine einzige der gezeigten Positionen mit einer Hilfskraftunterstützung belegt. Das Hilfsdrehmoment oder die Hilfskraft, welches bzw. welche zur Unterstützung des Fahrers mittels der jeweiligen Hilfskraftunterstützung 112, 114 oder 116 aufgebracht werden soll, wird unter Berücksichtigung des von einem Drehmomentsensor 118 ermittelten Eingangsdrehmoments bestimmt, der in der Hilfskraftunterstützung 112 oder 114 angeordnet sein kann.

Die Lenkwelle 1 weist eine mit dem Lenkrad 102 verbundene Eingangswelle 103 und eine mit dem Lenkritzel 104 verbundene Ausgangswelle 106 auf.

Die Ausgangswelle 106 ist über ein Gelenk 107, welches als Universal- bzw. Kreuzgelenk ausgebildet ist, mit einer Welle 109 verbunden, die eine Zwischenwelle der Lenkwelle 101 bildet und die über ein weiteres, gleichartig aufgebautes Gelenk 107 mit einer Eingangswelle 119 des Lenkgetriebes 105 verbunden ist.

Die Zahnstange 2 des Lenkgetriebes 105 ist freigestellt in Figur 2 gezeigt. Daraus geht hervor, dass die Zahnstange 2 stangenförmig ausgebildet ist mit einer in axialer Richtung A langgestreckten, zylindrischen Grundform, welche eine Längsachse L aufweist. Die axiale Richtung A , in der die Zahnstange 2 in dem Lenkgetriebe 105 längsverschieblich gelagert ist, liegt parallel zur Längsachse L.

Die Zahnstange 2 weist einen Verzahnungsabschnitt 21 auf, der auf einer Seite mit einer Verzahnung 22 versehen ist, die sich in Längsrichtung A erstreckt. Die der Verzahnung bezüglich der Längsachse L diametral gegenüberliegende Seite ist als Zahnstangenrücken 23 ausgebildet, im Folgenden kurz Rücken 23 genannt.

Weiterhin weist die Zahnstange 2 einen Schaftabschnitt 24 auf, der in dem in Figur 2 gezeigten Beispiel ein Gewinde 25 aufweist und auch als Gewindeabschnitt 24 bezeichnet wird. In dem Lenkgetriebe 105 ist auf das Gewinde 25 eine nicht dargestellte Spindelmutter aufgeschraubt, die von der Hilfskraftunterstützung 116 um die Längsachse L drehend antreibbar ist, wodurch zur Lenkunterstützung eine Kraft in Längsrichtung A auf die Zahnstange 2 aufgebracht werden kann.

Zur Bildung eines Kugelumlauftriebs, bei dem die Spindelmutter als Kugelumlaufmutter ausgebildet ist, kann das Gewinde 25 hinsichtlich des Gewindeprofils und der Materialeigenschaften optimiert sein als zum Abwälzen der Kugeln, beispielsweise durch Härten des Stahls, aus dem der Schaftabschnitt 24 gefertigt ist.

Der Verzahnungsabschnitt 21 und der Schaftabschnitt 24 weisen äußere, in Längsrichtung voneinander abgewandte freie Enden 26 auf, welches die Enden der Zahnstange 2 bilden, an welche die Spurstangen 108 angeschlossen werden können.

Die Zahnstange 2 ist erfindungsgemäß eine gebaute Zahnstange, bei der der Verzahnungsabschnitt 21 mit der Verzahnung 22 und der Schaftabschnitt 24 mit dem Gewinde 25 in einer Fügestelle 27 an ihren in axialer Richtung einander zugewandten Enden mit ihren Stirnflächen, im Folgenden als Fügeflächen 28 bezeichnet, miteinander verbunden sind, beispielsweise durch Schweißverfahren wie Reibschweißen.

In dem in Figur 2 dargestellten fertigen Zustand hat die Zahnstange 2 entlang der Längsachse L gemessen eine Länge Z, die sich zusammensetzt aus der Schaftabschnitt-Länge S und der Verzahnungsabschnitt-Länge V, jeweils gemessen vom freien Ende 26 bis zur Fügestelle 27. Bevorzugt kann der Verzahnungsabschnitt 21 und der Schaftabschnitt 24 aus einem Vollmaterial gefertigt sein.

Aufgrund der Ausbildung der Zahnstange 2 aus einzelnen Segmenten, ist es möglich, die Durchmesser der Rohteile für den Schaftabschnitt und den Verzahnungsabschnitt unterschiedlich auszulegen. Dadurch können Materialeinsparungen auch ohne die Verwendung von hohlen Rohmaterialien (Rohren) erreicht werden.

Vorteilhaft wird der Schaftabschnitt und der Verzahnungsabschnitt aus einem Vollmaterial gebildet, da das Ausgangsprodukt preiswerter ist, die Fertigung einfacher ist und die Nachbearbeitung, einschließlich des Härtens mit weniger Risiken verbunden ist.

Weiter können aufgrund der Ausbildung der Zahnstange aus einzelnen Segmenten, der Verzahnungsabschnitt und der Schaftabschnitt aus verschiedenen Werkstoffen gebildet werden. Bevorzugt wird der Verzahnungsabschnitt beispielsweise aus den Stahlsorten SAE1040 oder 37CrS4 nach DIN EN 10083 und der Schaftabschnitt aus dem Vergütungsstahl C45 nach DIN EN 10083 gebildet.

Zur Herstellung einer gebauten Zahnstange 2 müssen zunächst vorgefertigte Segmente bereitgestellt werden, die anschließend mit ihren Fügeflächen 28 an der Fügestelle 27 zusammengefügt werden. Im Folgenden wird erläutert, wie mit dem erfindungsgemäßen Verfahren die Herstellung einer gebauten Zahnstange 2 durch eine erfindungsgemäße Bearbeitung der Segmente besonders rationell erfolgen kann.

Die Herstellung eines Segments erfolgt ausgehend von einem Segment-Rohmaterialstück 3, welches auch kurz als Rohmaterialstück 3 bezeichnet wird, oder im Hinblick auf den weiteren Verwendungszweck beispielsweise als Schaft-Rohmaterialstück oder Verzahnungs-Rohmaterialstück. Ein Rohmaterialstück 3 kann bereitgestellt werden als Stangenmaterial, beispielsweise mit rundem Querschnitt, beispielsweise aus gewalztem oder stranggezogenem Stahl. Die Stücklänge G des Rohmaterialstücks 3 kann im Prinzip beliebig groß sein, in der Praxis werden bei einem Durchmesser in der Größenordnung von 20 bis 40 mm Stücklängen G im Bereich von 2 m bis 10 m angeboten. Dies ist ein Vielfaches der Länge Z einer Zahnstange 2 bzw. der Länge S eines Schaftabschnitts 24 oder der Länge V eines Verzahnungsabschnitts 21, die zwischen etwa 0,1 m und 0,5 m beträgt.

Wenn besondere Anforderungen an die Materialhärte gestellt werden, wird zur Herstellung des Schaft- oder Verzahnungsabschnitts gehärteter Stahl verwendet. Erfindungsgemäß kann das Härten erfolgen, wie in Figur 3 schematisch dargestellt: Ein Rohmaterialstück 3 aus härtbarem Stahl, beispielsweise ein Schaft-Rohmaterialstück, wird bereitgestellt und auf der Längsachse L ausgerichtet. Parallel zur Längsachse L wird es längs in Durchlaufrichtung D bewegt, wie in Figur 3 mit dem Pfeil angedeutet. Dabei wird es durch eine Durchlauf-Erwärmungseinrichtung 41 hindurchgeführt, beispielsweise durch die Spulenanordnung einer Induktions-Heizvorrichtung. In der Durchlauf-Erwärmungseinrichtung 41 erfolgt ein Durchlauferwärmen, bei dem der Stahl bis über seine Austenitisierungstemperatur erwärmt wird. In Durchlaufrichtung D schließt sich eine Durchlauf-Kühleinrichtung 42 an, durch die das erwärmte Rohmaterialstück 3 ebenfalls im kontinuierlichen Durchlauf hindurchbewegt wird. Dabei erfolgt beispielsweise durch ein gasförmiges und/oder flüssiges Kühlfluid ein kontrolliertes Durchlaufkühlen, wodurch der Stahl gehärtet wird, folglich wird ein Durchlaufhärten realisiert. Die Prozessparameter wie Temperaturen sowie Aufheiz- und Abkühldauer und -geschwindigkeit werden in Abhängigkeit von der eingesetzten Stahlsorte und den durch das Härten angestrebten Materialeigenschaften vorgegeben. Nach dem Durchlaufkühlen in der Durchlauf-Kühleinrichtung 42 liegt ein gehärtetes Segment-Halbzeug 31 vor, welches weiteren Bearbeitungsschritten zugeführt werden kann. Wie im Beispiel der Figur 3 dargestellt, besitzt das Segment-Halbzeug nach der Härteoperation bevorzugt einen zylindrischen Kernbereich 311, der keine Aufhärtung gegenüber dem Ausgangsmaterial des Rohmaterialstücks 3 erfahren hat.

Ein Vorteil des Durchlaufhärtens ist, dass ein gehärtetes Schaftsegment-Halbzeug 31 bereitgestellt wird, welches im Wesentlichen die Stücklänge G des Rohmaterialstücks 3 hat, die einem Vielfachen der Länge Z der Zahnstange bzw. der Schaftabschnittlänge S oder der Verzahnungsabschnitt-Länge V entspricht. Dadurch kann eine rationellere Fertigung als im Stand der Technik erfolgen, bei dem es üblich ist, das Rohmaterial vor dem Härten auf eine Segmentlänge Is abzulängen.

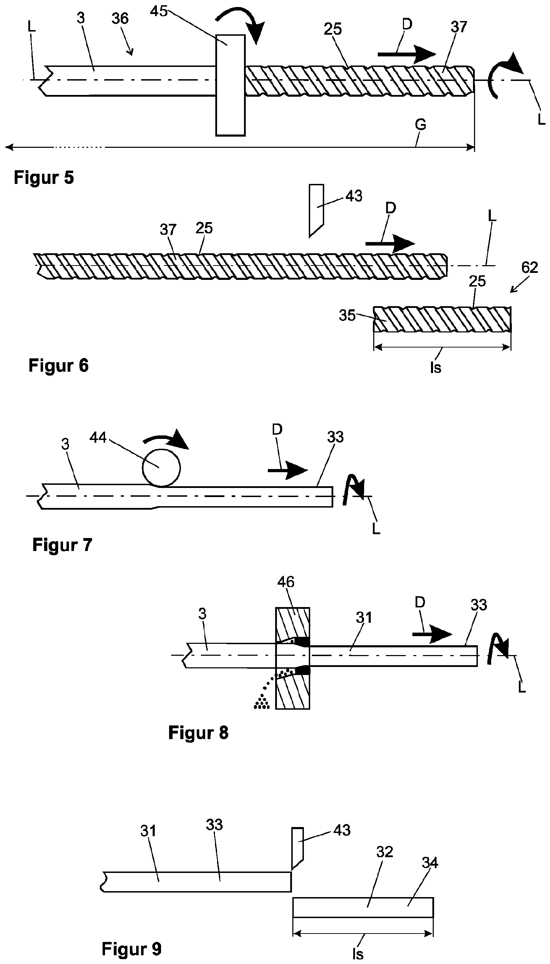

Von dem gehärteten Schaftsegment-Halbzeug 31, welches die Stücklänge G hat, können gehärtete Segmente 32, welche eine Segmentlänge Is haben, mittels einer Trenneinrichtung 43 einfach abgelängt werden. Dies ist schematisch in Figur 9 dargestellt. Dadurch, dass die Stücklänge G ein Vielfaches der Segmentlänge Is eines gehärteten Segments 32 beträgt, kann rationell eine entsprechend große Anzahl von Segmenten 32 erzeugt werden. Die gehärteten Segmente 32 können mit weiteren Segmenten verbunden oder als Segment-Rohlinge genutzt werden, die in weiteren Bearbeitungsschritten gemäß ihrem Verwendungszweck, beispielsweise als Schaft-, Verbindungs- oder sonstige Funktionssegmente bearbeitet werden.

Zur Herstellung einer Zahnstange 2 kann es erforderlich sein, ein Segment mit hoher Maßgenauigkeit im Profil bereitzustellen. Das im Stand der Technik übliche Schleifen von Segment-Rohlingen, welche bereits auf Segmentlänge Is gekürzt sind, ist umständlich und aufwendig.

Um die Herstellung rationeller zu gestalten, wird das erfindungsgemäße Verfahren vorgeschlagen, welches schematisch in Figur 4 dargestellt ist. Dabei wird ein Schaft-Rohmaterialstück 3, welches eine Stücklänge G hat, beispielsweise ein Schaft-Rohmaterialstück, bereitgestellt und auf der Längsachse L ausgerichtet. Parallel zur Längsachse L wird es längs in Durchlaufrichtung D bewegt, wie in Figur 4 mit dem Pfeil angedeutet. Dabei wird es durch eine Durchlauf-Schleifeinrichtung 44 hindurchgeführt, während dessen es um die Längsachse L rotiert wird, wie mit dem gebogenen Pfeil angedeutet. Dadurch wird das Rohmaterialstück 3 über seine gesamte Stücklänge G mittels Durchlaufschleifens durchgehend maßgenau rund geschliffen und verlässt die Durchlauf-Schleifeinrichtung 44 in Durchlaufrichtung D als maßgenau geschliffenes Segment-Halbzeug 33.

Das maßgenau geschliffene Segment-Halbzeug 33 hat dieselbe Stücklänge G wie das ursprüngliche, dem Durchlaufschleifen zugeführte Rohmaterialstück 3. Von diesem geschliffenen Segment-Halbzeug 33 können mittels einer Trenneinrichtung 43, wie in Figur 9 für ein gehärtetes Segment-Halbzeug 31 dargestellt, einfach maßgenau rund geschliffene Segmente 34 abgelängt werden. Dadurch, dass die Stücklänge G des Segment-Halbzeugs 33 ein Vielfaches der Segmentlänge ls eines geschliffenen Segments 34 beträgt, kann rationell eine entsprechend große Anzahl von Segmenten 34 erzeugt werden. Die Segmente 34 können als Segment-Rohlinge genutzt werden, die in weiteren Bearbeitungsschritten gemäß ihrem Verwendungszweck, beispielsweise als Schaft-, Verbindungs- oder sonstige Funktionssegmente bearbeitet werden.

Alternativ zu einem Segment-Rohmaterialstück 3 ist es denkbar und möglich, ein gehärtetes Segment-Halbzeug 31 gemäß dem in Figur 4 dargestellten Durchlaufhärten im Durchlaufschleifen zu bearbeiten. Im Ergebnis wird ein maßgenau geschliffenes, gehärtetes Segment-Halbzeug 33 mit der Stücklänge G erzeugt, von dem rationell mehrere Segmente 34 abgelängt werden können.

In Figur 5 und Figur 6 ist schematisch dargestellt, wie durch das erfindungsgemäße Verfahren ein als Gewindesegment 35 ausgebildetes Schaftsegment rationell herzustellen. Hierzu wird ein Schaft-Rohmaterialstück 36 bereitgestellt, welches wie für die vorangehenden Ausführungen beschrieben eine Stücklänge G hat, die einem Mehrfachen der Schaftabschnitt-Länge S entspricht. Wenn ein Schaftabschnitt 24 als Gewindeabschnitt ausgebildet ist mit einem über seine Länge durchgehenden Gewinde 25, entspricht die Gewindelänge in axialer Richtung A der Schaftabschnitt-Länge S.

In Figur 5 ist eine Wirbeleinrichtung 45 dargestellt, in die in Durchlaufrichtung D ein Segment-Rohmaterialstück 3 mit der Stücklänge G eingeführt wird. Mittels eines schnell rotierenden Wirbelkopfes wird in der Wirbeleinrichtung in das in Durchlaufrichtung D bewegte und dabei langsam rotierte Segment-Rohmaterialstück 3 fortschreitend ein Gewinde 25 eingeschnitten, welches sich in axialer Richtung A kontinuierlich über die gesamte Stücklänge G erstreckt. Durch dieses Gewindewirbeln im Durchlaufverfahren, auch kurz als Durchlaufwirbeln bezeichnet, wird ein Gewinde-Halbzeug 37 erzeugt, welches dieselbe Stücklänge G hat wie das Segment-Rohmaterialstück 3.

Von dem Gewinde-Halbzeug 37 können mittels einer Trenneinrichtung 43 jeweils Gewinde-segmente 35 abgelängt werden, die jeweils eine Segmentlänge Is haben. Dadurch, dass die Stücklänge G des Gewinde-Halbzeugs 37 ein Vielfaches der Segmentlänge Is der Gewindesegmente 35 beträgt, kann rationell eine entsprechend große Anzahl von Gewindesegmenten 35 erzeugt werden. Die Gewindesegmente 35 können mit weiteren Segmenten verbunden werde, beispielsweise mit einem Zahnsegment, oder als Segment-Rohlinge genutzt werden, die in weiteren Bearbeitungsschritten gemäß ihrem Verwendungszweck bearbeitet werden.

Figur 7 zeigt, wie ein Segment-Rohmaterialstück 3, beispielsweise zur Herstellung eines Verzahnungsabschnitts 21, mittels einer Durchlauf-Schleifeinrichtung 44 in einem kontinuierlichen Durchlauf-Schleifvorgang über seine gesamte Stücklänge G rund auf Maß geschliffen werden kann. Alternativ ist es möglich, das Segment-Rohmaterialstück 3 mittels einer Schäl-einrichtung 46, wie in der Figur 8 dargestellt, ebenfalls im Durchlauf über seine gesamte Stücklänge G auf Maß zu bearbeiten, um ein maßgenaues Segment-Halbzeug 33 zu erzeugen. Im Gegensatz zur Darstellung der Schaft-Rohmaterialstücke 3, werden Verzahnungs-Rohmaterialstücke 32 nicht gehärtet, um eine nachfolgende Umformung nicht zu erschweren. Entsprechend wird das Verzahnungs-Rohmaterialstück 32 direkt nach der Bearbeitung mittels Schleifen (Figur 7) oder Schälen (Figur 8) auf die geforderte Länge Is getrennt, bevorzugt mittels Sägen.

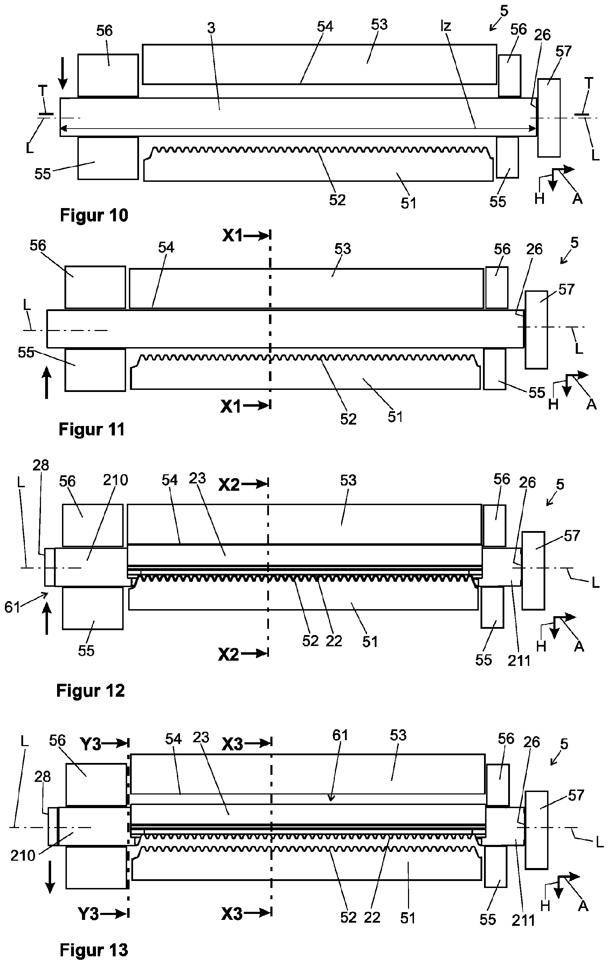

Figuren 10 bis 13 zeigen schematisch Momentaufnahmen eines Gesenks 5 in aufeinanderfolgenden Schritten des erfindungsgemäßen Verfahrens. Die Ansicht, d.h. die Blickrichtung, ist dabei quer zur Längsachse L (die parallel zur Längsrichtung A liegt) in Breitenrichtung B, senkrecht zur Höhenrichtung H. Die Breitenrichtung B ist definiert durch die Richtung, die orthogonal zur Stirnschnittebene SE der Verzahnung 22 ausgerichtet ist. Im Fall einer Geradverzahnung ist die Breitenrichtung B durch die Richtung definiert, in der sich die Verzahnung 22 quer zur Längsachse L mit ihrer Verzahnungsbreite b erstreckt. Die Höhenrichtung H ist definiert durch die radiale Richtung, welche senkrecht zur Längsachse L und senkrecht zur Breitenrichtung B senkrecht vom Rücken 23 durch die Verzahnung 22 einer Zahnstange 2 geht.

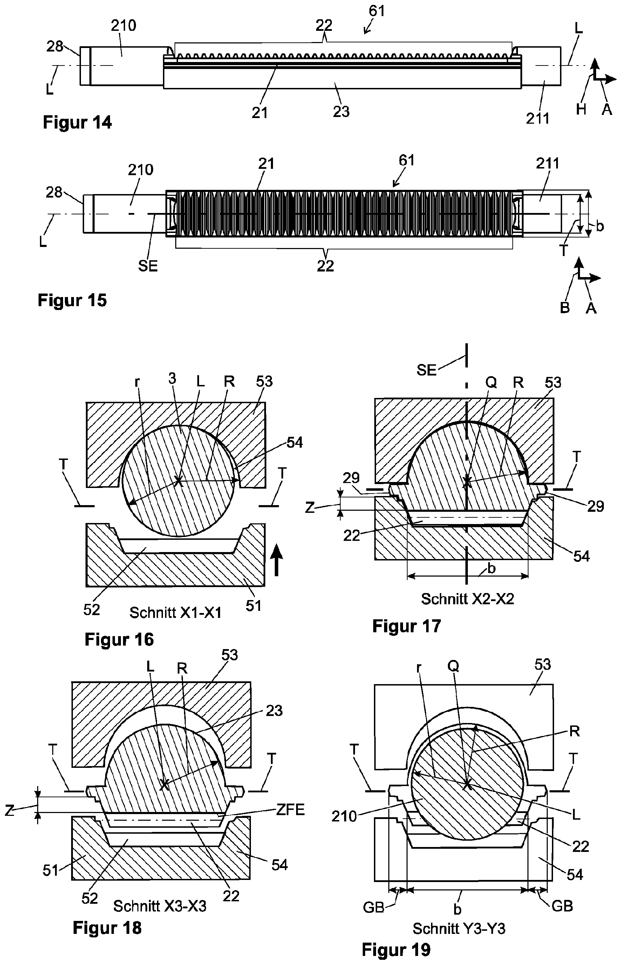

Das Gesenk 5 umfasst ein Zahngesenkteil 51 mit einer Zahnformausnehmung 52, welche geformt ist als Negativabdruck der Verzahnung 22, und einem Rückengesenkteil 53 mit einer Rückenformausnehmung 54. Das Gesenk 5 ist in einer Trennebene T getrennt, die sich parallel zur Längsachse L in der Breitenrichtung B erstreckt. Die Rückenformausnehmung 54 ist als Negativform des Rückens 23 ausgebildet, und im dargestellten im Wesentlichen halbzylindrisch geformt mit einem Rückenradius R, wie deutlich in der Querschnittdarstellung von Figur 16 erkennbar ist. Es ist ebenfalls denkbar und möglich, dass der Rücken ein gotisches Querschnittsprofil aufweist, mit zwei konvex gewölbten Abschnitten, die winklig zueinander stehen. In Längsrichtung A, d.h. parallel zur Längsachse L, sind beiderseits benachbart zum Zahngesenkteil 51 obere Halteeinrichtungen 55 (in der Darstellung unten) und benachbart zum Rückengesenkteil 53 untere Halteeinrichtungen 56 (in der Darstellung oben) angeordnet. In Längsrichtung auf einer den Gesenkteilen 52, 53 abgewandten Seite ist neben den Halteeinrichtungen 55, 56 ein Endanschlag 57 angeordnet.

Zur Durchführung des erfindungsgemäßen Verfahrens wird ein zylindrisches Segment-Rohmaterialstück 3, im Folgenden auch kurz als Rohling 3 bezeichnet, mit der Segmentlänge Iz breitgestellt, auf Schmiedetemperatur -je nach Verfahren 750° C bis 1250°C - erwärmt, und zwischen die in geöffneter Stellung voneinander beabstandete Zahnformausnehmung 52 und die Rückenformausnehmung 53 eingesetzt. Durch Einspannen zwischen den Halteeinrichtungen 55 und 56 erfolgt eine definierte radiale Fixierung der Längsachse L des Rohlings 3 relativ zum Gesenk 5. Mit dem freien Ende 26 wird der Rohling 3 in Längsrichtung A gegen den Endanschlag 57 angeschlagen, wodurch der Rohling 3 axial, d.h. in Richtung der Längsachse L positioniert wird.

Aus dem geöffneten Zustand gemäß Figur 10 wird das Rückengesenkteil 53 wie in Figur 10 mit dem Pfeil angedeutet entgegen der Höhenrichtung H bewegt, bis die Rückenformausnehmung 54 rückseitig - in den Zeichnungen von oben - an dem Rohling 3 anliegt, wie in Figuren 11 und 16 dargestellt. Der Schnittdarstellung von Figur 16 ist entnehmbar, dass der zylindrische Rohling 3 einen Rohradius r hat, der wie erfindungsgemäß gefordert kleiner ist als der Radius der Rückenformausnehmung 54, der Rückenradius R. Entsprechend liegt die Rückenformausnehmung 54 zunächst nur linienförmig im Rückenbereich am Außenumfang des Rohlings 3 an. Das Rückengesenkteil 53 befindet sich nun in Schmiedeposition.

Im nächsten Schritt wird der Schmiedehub durchgeführt, wobei das Zahngesenkteil 51in Höhenrichtung H, senkrecht zur Längsachse L, zahnseitig gegen den Rohling 3 bewegt wird - in der Zeichnung nach oben - wie in Figur 11 und 12 mit dem Pfeil angedeutet. Dabei erfolgt die Umformung des Rohlings 3, indem das Material, bevorzugt Stahl auf Schmiedetemperatur, plastisch verformt wird, wobei das Material fließt und die Kavität zwischen dem Rückengesenkteil 53 und dem Zahngesenkteil 51 ausfüllt. Dadurch wird die Rückenformausnehmung 54 rückseitig in dem Rohling 3 abgeformt, so dass der Rücken 23 mit dem Rückenradius R ausgebildet wird, und auf der bezüglich der Längsachse L gegenüberliegenden Seite wird zahnseitig durch die Zahnformausnehmung 51 die Verzahnung 22 eingeformt, so dass der Verzahnungsabschnitt 21 ausgebildet wird. Auf diese Weise ist der Rohling 3 in ein Zahnsegment 61 umgeformt worden, welches einen Verzahnungsabschnitt 21 mit der Verzahnung 22, dem Rücken 23 sowie sich an den Verzahnungsabschnitt 21 anschließenden Übergangsabschnitte 210 und 211 aufweist. Die Verzahnung 22 umfasst eine Zahnfußebene ZFE. Die Übergangsabschnitte 210 und 211 sind beim Schmieden nicht verformt worden und behalten folglich denselben Rohradius r und die Längsachse L wie der Rohling 3. Am freien Ende des Übergangsabschnitts 210 befindet sich stirnseitig die Fügefläche 28, wo ein Schaftsegment, beispielsweise in Form eines Gewindesegments 35, angefügt werden kann.

Im Querschnitt ist die Endposition des Schmiedehubs in Figur 17 in dem Querschnitt X2-X2 durch den Verzahnungsabschnitt 21 gezeigt. Darin ist erkennbar, dass die Stauchung in Höhenrichtung H, senkrecht zur Längsachse L, beim Schmieden so groß ist, dass im Verzahnungsabschnitt 21 Material zwischen dem Zahngesenkteil 51 und dem Rückengesenkteil 53 in der Trennebene T unter Bildung von in der Breite B vorstehenden Graten 29 mit einer Gratbreite GB bezüglich der Längsachse L seitlich in Breitenrichtung B hinausgepresst wird. Die Graten 29 sind von der Zahnfußebene ZFE in einem Gratabstand Z in Höhenrichtung H beabstandet. Der Gratabstand Z ist der geringste Abstand, gemessen in Höhenrichtung H, zwischen der Zahnfußebene ZFE und dem Randbereich des jeweiligen Grates 29. Der Randbereich des jeweiligen Grates 29 ist durch den frei umgeformten Bereich gebildet. Um die Verzahnung 22 bei der Umformung besonders gut auszubilden, weist der Gratabstand Z bevorzugt einen Wert auf, der kleiner ist als 20% des Rückenradius R. Besonders bevorzugt weist der Gratabstand Z einen Wert auf, der kleiner ist als 15% des Rückenradius R. Ganz besonders bevorzugt weist der Gratabstand Z einen Wert auf, der kleiner ist als 5% des Rückenradius R. Dadurch, dass die frei umgeformten Grate nah an der Zahnfußebene ZFE ausgebildet sind, lässt sich ein verbessertes Fließverhalten bei der Umformung und eine verbesserte Gefügeausbildung der Verzahnung 22 erreichen.

Der Rückenradius R definiert im Verzahnungsabschnitt 21 eine Rückenachse Q, um die sich der Rücken 23 mit seiner halb- bzw. teilzylindrischen Form koaxial erstreckt. Durch die beim Umformen bewirkte Stauchung und das damit einhergehende Fließen in Breitenrichtung B erhält der Rücken eine dem zweifachen Rückenradius R entsprechende Rückenbreite (2 x R), in Breitenrichtung B gemessen. Die dem Rücken 23 gegenüberliegende Verzahnung 22 erhält durch das Umformen eine Verzahnungsbreite b in Breitenrichtung B. Bevorzugt wird eine nutzbare Verzahnungsbreite b, auch Zahnfußbreite genannt, erzeugt, die im Wesentlichen der Rückenbreite (2 x R) entspricht. Dadurch erfolgt eine optimale radiale Abstützung der Verzahnung 22 durch den Rücken 23 und ein hohes Biegewiderstandsmoment wird realisiert.

Sowohl die Rückenbreite (2 x R) als auch die Verzahnungsbreite b können dank des erfindungsgemäßen Verfahrens größer sein, als der Rohdurchmesser (2 x r) des Rohlings 3, der dem doppelten Rohradius entspricht. Dadurch wird die Krafteinleitung vom Lenkritzel 104 in die Verzahnung 22 verbessert. Außerdem kann eine optimierte Lagerung des relativ zum Rohling 3 verbreiterten Rückens 23 im Lenkgetriebe 105 realisiert werden.

Nach dem Schmiedehub werden das Rückengesenkteil 53 und das Zahngesenkteil 51 in einer dem Schmiedehub entgegengesetzten Rückhubbewegung wieder auseinander gefahren, wie in Figur 13 dargestellt und mit den Pfeilen angedeutet. Dadurch ist das Gesenk 5 wieder geöffnet, wie in Figur 10 gezeigt. In dieser Stellung kann das fertige Zahnsegment 61 aus dem Gesenk 5 entnommen werden, und ein neuer Rohling 3 eingelegt werden, wie in Figur 10 dargestellt.

Das fertige Zahnsegment 61 ist in Figur 14 in einer Seitenansicht quer zur Längsachse L in Breitenrichtung B gezeigt, also parallel zur Verzahnung 22 in Richtung der Verzahnungsbreite b, und in Figur 15 in einer Draufsicht auf die Verzahnung 21 quer zur Längsachse L, also entgegen der Höhenrichtung H.

Aus den in den Figuren 16 bis 19 gezeigten Querschnitten, insbesondere aus Figur 19, geht hervor, das die Längsachse L, welche die Achse des Rohlings 3 und nach dem Umformen entsprechend die Achse des Übergangsabschnitts 210 bildet, übereinstimmt mit der Rückenachse Q, die mit dem Rückenradius R koaxial von dem Rücken 23 umgeben ist. Diese koaxiale Anordnung ist deutlich in Figur 19 dadurch erkennbar, dass der Rohradius r und der Rückenradius R sich auf dieselbe Achse L bzw. Q beziehen.

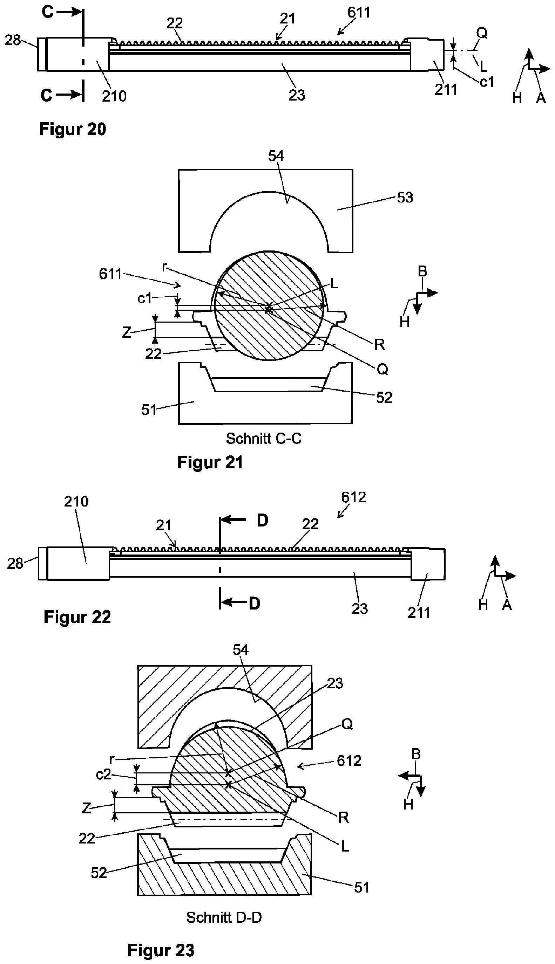

Eine zweite Ausführungsform eines erfindungsgemäßen Zahnsegments 611 ist in Figur 20 in einer Seitenansicht entsprechend Figur 14, und im Schnitt C-C durch den Übergangsabschnitt 210 analog zu Figur 19 dargestellt. Im Unterschied zum Zahnsegment 61 ist hierbei die Rückenachse Q gegenüber der Längsachse L radial in Richtung auf die Verzahnung 21 zu parallel versetzt, und zwar um einen Abstand c1, der als Offset bezeichnet wird. Der Offset c1 entspricht im gezeigten Beispiel der Differenz der Radien R-r, ist also größer als null, und kann als positiver Offset bezeichnet werden. Im Querschnitt gesehen schließt der Rücken 23 in radialer Richtung am untersten Punkt mit dem Umfang des Übergangsabschnitts 210 ab. Entsprechend liegt die Verzahnung 22 in radialer Richtung um die Differenz (R-r) näher zum Außenumfang des Übergangsabschnitts 210, oder ist mit anderen Worten weniger tief in den Querschnitt des Zahnsegments 61 eingeformt, als bei der ersten Ausführung gemäß Figur 14.

Eine dritte Ausführungsform eines erfindungsgemäßen Zahnsegments 612 ist in Figur 22 in einer Seitenansicht entsprechend Figur 14, und in Figur 23 im Schnitt D-D durch den Verzahnungsabschnitt 21 analog zu Figur 18 dargestellt. Wiederum ist wie bei der zuletzt beschriebenen Ausführung des Zahnsegments 611 die Rückenachse Q gegenüber der Längsachse L versetzt, und zwar um einen Abstand bzw. Offset c2. Der Offset c2 ist in dieser Ausführung größer als die Radiendifferenz (R-r), so dass der Übergangsabschnitt 210 im Querschnitt über den Rücken 23 vorsteht, wie in der Schnittdarstellung von Figur 23 erkennbar ist. Der Offset c2 ist im gezeigten Beispiel so gewählt, dass die Verzahnung 22 in Höhenrichtung H mit dem Umfang des Übergangsabschnitts 210 bündig abschließt. Die Verzahnung 22 liegt bezüglich der Längsachse L höher als bei der zweiten Ausführung des Zahnsegments 611.

Dank des erfindungsgemäßen Verfahrens kann bei Bedarf ein Offset c1 oder c2 durch eine entsprechende Gestaltung des Gesenks 5 einfach realisiert werden. Im Einzelnen kann dies dadurch erreicht werden, dass der radiale Versatz zwischen den Halteeinrichtungen 55 und 56, die die Lage der Längsachse L fixieren, und dem Zahngesenkteil 51 und dem Rückengesenkteil 53, welche durch die Ausformung des Rückens 23 die Lage der Rückenachse Q bestimmen, entsprechend der Radiendifferenz (R-r) eingestellt wird. Auf diese Weise kann mit einem relativ einfach aufgebauten Gesenk 5 die Tiefe der Verzahnung 22 entsprechend den jeweiligen Anforderungen im Lenkgetriebe 105 realisiert werden.

Ein weiterer Vorteil des erfindungsgemäßen Verfahrens besteht auch darin, dass Insbesondere auch mit weniger Materialeinsatz eine Zahnstange dargestellt werden kann, weil die Radiendifferenz keinen Abfall verursacht. Dadurch kann der Materialeinsatz verringert werden, auch wenn der Rohling aus einem Vollmaterial gebildet ist.

Mit Vorzug wird in diesem Verfahren eine Zahnstange für ein Lenkgetriebe eines Kraftfahrzeuges dargestellt, die einen Verzahnungsabschnitt 21 aufweist, der sich entlang der Längsachse L erstreckt und die in Bezug zur Längsachse L gegenüberliegend zum Verzahnungsabschnitt 21 einen zylindersegmentförmigen Rücken 23 mit einem Rückenradius R aufweist, wobei weiter ein zylindrischer Übergangsabschnitt 201, 211 am Verzahnungsabschnitt 21 ausgebildet ist, dessen Radius r kleiner als der Rückenradius R ist. Bevorzugt ist ein Radienunterschied im Bereich von 3% bis 7% in Bezug auf den Rückenradius R. Besonders bevorzugt liegt ein Radienunterschied im Bereich von 4,5% bis 6,5%. Hiermit lassen sich gute Ausformungen bei gleichzeitig vorteilhaften Materialeinsparungen darstellen. Das erfindungsgemäße Verfahren bringt noch einen weiteren wesentlichen Vorteil: Zum Einsatz einer Zahnstange, die einen im Beispiel dargestellten Verzahnungsabschnitt aufweist, in einem Lenkgetriebe sind eine Vielzahl von Parametern einzuhalten. Beispielsweise soll der die Zahnstange einbeschriebene Durchmesser möglichst klein sein, um Bauraum zu sparen. Insbesondere soll die Gratbreite GB, die sich beidseits der Verzahnungsbreite ausbildet, beschränkt bleiben. Dabei ist es gewünscht, die mechanische Nachbearbeitung zu begrenzen. Insbesondere kann durch das vorgeschlagene Verfahren die beiden Grate 29 mit einer jeweiligen Gratbreite GB mit weniger als 25% der Verzahnungsbreite b dargestellt werden, ohne dass eine mechanische Nachbearbeitung erfolgen muss. Bevorzugt ist eine jeweilige Gratbreite von weniger als 18% der Verzahnungsbreite. Durch die Optimierung der Parameter im Werkzeug können jeweilige Gratbreiten GB von weniger als 10% oder besonders bevorzugt von maximal 5% der Verzahnungsbreite b erreicht werden. Damit ist es nicht erforderlich, die Grate 29, die beim Umformen beidseits der Verzahnung entstehen, zu entfernen, wodurch die mechanische Nachbearbeitung des Verzahnungsabschnitts 21 reduziert werden kann.

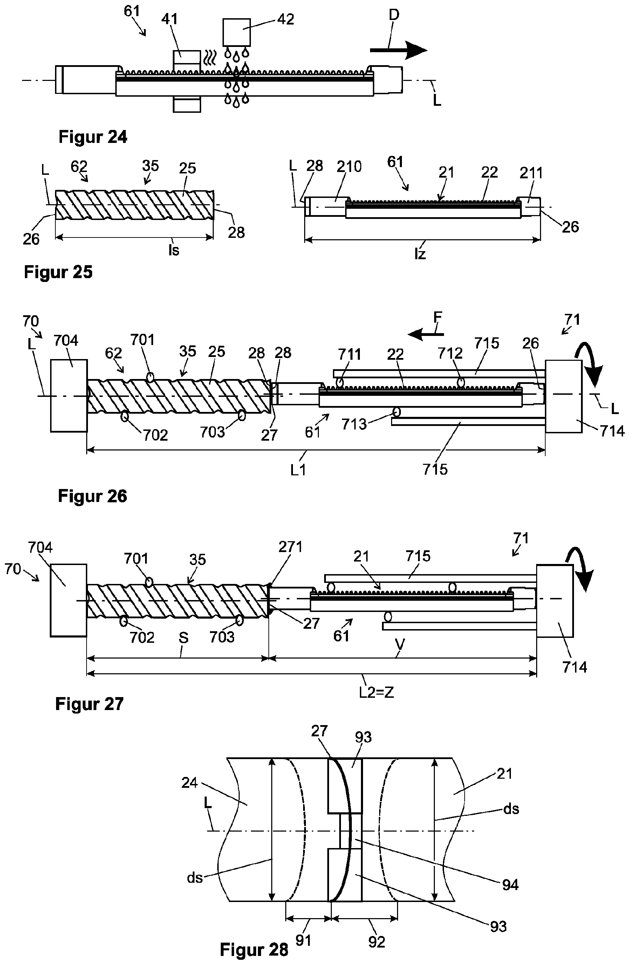

Nach dem Schmieden kann ein Zahnsegment 61 (oder 611 bzw. 612) im Durchlaufverfahren gehärtet werden, wie in Figur 24 gezeigt. Dabei wird das Zahnsegment 61 parallel zur Längsachse L durch eine Durchlauf-Erwärmungseinrichtung 41 und einer dieser in Durchlaufrichtung D nachgeschaltete Durchlauf-Kühleinrichtung 42 hindurchbewegt. Durch entsprechende Wahl der thermischen und zeitlichen Parameter kann der Stahl gehärtet werden, wie dies im Prinzip bereits weiter oben zu Figur 3 für ein Schaftsegment-Halbzeug 31 beschrieben ist. Dadurch kann für die im Betrieb zu erwartenden Beanspruchungen optimierte Härte eingestellt werden.

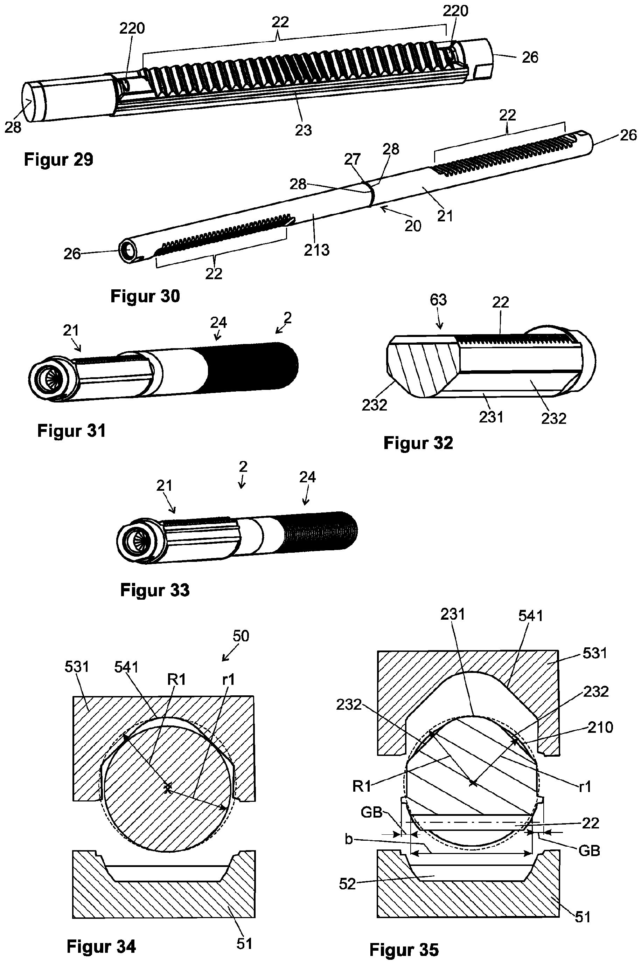

Figur 32 zeigt ein Zahnsegment 63, welches einen V-förmigen Rücken 231 hat, kurz V-Rücken 231 genannt. Die V-Form wird durch zwei V-Schenkelflächen 232, die von der Verzahnung 22 aus gesehen zum Rücken 231 hin winklig zusammenlaufen.

Der V-Rücken 231 ist im Querschnitt umschlossen von einem Hüllkreis mit dem Rückenradius R1, wie der Schnittdarstellung von Figur 35 entnehmbar ist. Die V-Schenkelflächen 232 umfassen Sekanten des Hüllkreises, der in Figur 35 gestrichelt eingezeichnet ist.

An die Verzahnung 22 schließt sich ein Übergangsabschnitt 210 an, wie bei der oben zu Figur 10 bis Figur 24 beschriebenen D-förmigen Ausführungsform. Der Übergangsabschnitt 210 hat einen Radius r1, der dem Rohradius r1 des Rohlings 3 gemäß Figur 34 entspricht.

Das Schmieden kann gemäß dem erfindungsgemäßen Verfahren in einem Gesenk 50 erfolgen, wie im Schnitt in Figur 34 analog zu Figur 16 und in Figur 35 analog zu Figur 18 oder Figur 23 dargestellt ist. Das Zahngesenkteil 51 des Gesenks 50 gleich aufgebaut wie in den oben beschriebenen D-förmigen Ausführungen des Gesenks 5. Abweichend davon hat das Rückengesenkteil 531 eine im Querschnitt V-förmige Rückenformausnehmung 541.

Figur 34 ist entnehmbar, wie ein Rohling 3 mit Rohradius r1 zwischen das Rückengesenkteil 531 und das Zahngesenkteil 51 eingelegt wird. Der Hüllkreis der Rückenformausnehmung 541 mit dem Rückenradius R1 ist gestrichelt eingezeichnet. Es ist erkennbar, dass in dem nicht umgeformten Rohzustand der Rohling 3 mit dem im Vergleich zum Rückenradius R1 kleineren Rohradius r1 das Gesenk 5 in der Breitenrichtung B nicht ausfüllt, und der Rohling 3 nicht koaxial im Hüllkreis liegt.

Figur 35 zeigt das aus dem Rohling 3 geschmiedete fertige Zahnsegment 63. In diesem Ausführungsbeispiel liegen der Rücken 231 mit seinem Hüllkreis und der Übergangsabschnitt 210 koaxial zur Längsachse L, d.h. die Radien r1 und R1 beziehen sich auf die Längsachse L, wie für einen D-förmigen Rücken 23 in dem Ausführungsbeispiel gemäß Figuren 10 bis 19. Es ist allerdings auch denkbar und möglich, nach Maßgabe der Anforderungen des Lenkgetriebes für einen V-Rücken 231 einen Offset vorzugeben, wie in den Ausführungen gemäß Figuren 20, 21 oder Figuren 22, 23.

Figuren 31 und 32 zeigen Ausführungen von Zahnstangen 2 mit unterschiedlichen Durchmesserverhältnissen von Verzahnungsabschnitt 21 und Schaftabschnitt 24, wobei der Schaftabschnitt 24 gemäß Figur 31 einen größeren Durchmesser hat.

Ein Vorteil des erfindungsgemäßen Schmiedeverfahrens zur Herstellung eines Zahnsegments 61, 611, 612 oder 63 ist, dass zur Umformung eines Rohlings 3 mit im Vergleich zum Rückenradius R (bzw. R1) kleineren Rohradius r (bzw. r1) kleinere Schmiedekräfte erforderlich sind, als wenn der Rohradius dem Rückenradius entspricht, wie im Stand der Technik.

In analoger Weise, wie oben bereits für den D-förmigen Rücken ausgeführt, ergeben sich dieselben Vorteile, in Bezug auf die Gratbreite und die Verhältnisse des Rückenradius R1 im Verhältnis zum Rohradius r1.

Mit Vorzug wird in diesem Verfahren eine Zahnstange für ein Lenkgetriebe eines Kraftfahrzeuges dargestellt, die einen Verzahnungsabschnitt 21 aufweist, der sich entlang der Längsachse L erstreckt und die in Bezug zur Längsachse L gegenüberliegend zum Verzahnungsabschnitt 21 einen zylindersegmentförmigen Rücken 23 mit einem Rückenradius R1 aufweist, wobei weiter ein zylindrischer Übergangsabschnitt 201, 211 am Verzahnungsabschnitt 21 ausgebildet ist, dessen Radius r1 kleiner als der Rückenradius R1 ist. Bevorzugt ist ein Radienunterschied im Bereich von 3% bis 7% in Bezug auf den Rückenradius R1 bezogen. Besonders bevorzugt ist ein Radienunterschied im Bereich von 4,5% bis 6,5%.

Auch in dieser Ausführungsform mit dem V-Rücken kann die jeweiligen Gratbreite GB mit weniger als 25% der Verzahnungsbreite b dargestellt werden, ohne dass eine mechanische Nachbearbeitung erfolgen muss. Auch hier ist entsprechend bevorzugt, eine jeweilige Gratbreite von weniger als 20% der Verzahnungsbreite oder mehr bevorzugt von weniger als 15% oder besonders bevorzugt von maximal 10% der Verzahnungsbreite b zu erreichen.

In den Figuren 25 bis 27 ist ein erfindungsgemäßes Verfahren zur Herstellung einer Zahnstange 2 dargestellt, bei dem Schaftsegments, hier ein Gewindesegment 35, mit einem Zahnsegment 61 mittels Reibschweißen gefügt wird.

Das Gewindesegment 35 kann beispielsweise gefertigt werden, wie vorangehend zu Figur 5 und Figur 6 beschrieben. Das Gewindesegment 35 hat in Richtung der Längsachse L eine Segmentlänge Is und weist auf einer Stirnseite eine Fügefläche 28 auf.

Das Zahnsegment 61 kann beispielsweise mittels eines Verfahrens zur Verfügung gestellt werden, wie es vorangehend anhand der Figuren 10 bis 23 oder Figuren 36 bis 40 beschrieben ist. das Zahnsegment 61 hat eine Segmentlänge Iz und weist auf einer Stirnseite ebenfalls eine Fügefläche 28 auf.

Das Gewindesegment 35 wird in eine Spanneinrichtung 70 eingespannt und koaxial auf der Längsachse L ausgerichtet, wie in Figur 26 dargestellt. Die Spanneinrichtung 70 weist Spannelemente 701, 702 und 703 und ein Widerlager 74 auf. Die Spannelemente 701, 702 und 703 liegen derart von außen zwischen den Gewindegängen des Gewindes 25 an, dass eine definierte Ausrichtung auf der Längsachse L gewährleistet ist. Dabei bildet das Gewinde 25 eine Referenzfläche. Mit seinem freien Ende 26 stützt sich das Gewindesegment 35 in axialer Richtung gegen das Widerlager 704 ab, wodurch eine exakte axiale Positionierung in Richtung der Längsachse L erreicht wird.

Das Zahnsegment 61 wird in eine Spanneinrichtung 71 eingespannt und koaxial auf der Längsachse L ausgerichtet. Die Spanneinrichtung 71 weist Spannelemente 711, 712 und 713 auf. Die Spannelemente 711 und 712 liegen auf der Verzahnung 22 an, das Spannelement 713 an dem Rücken 23. Dadurch bilden die Funktionsflächen der Verzahnung 22 bzw. des Rückens 23 Referenzflächen, die exakt auf der Längsachse L ausgerichtet werden.

Mit seiner Fügefläche 28 liegt das Zahnsegment 61 gegen die Fügefläche 28 des Gewindesegments 35 an. Mit seinem freien Ende 26 stützt sich das Zahnsegment 61 in axialer Richtung gegen ein Druckstück 714 ab, welches über Verbindungselemente 715 mit den Spannelementen 711, 712 und 713 der Spanneinrichtung 71 starr und drehfest relativ zur Längsachse L verbunden ist.

Die Spanneinrichtung 71 ist von einer nicht dargestellten Antriebseinrichtung um die Längsachse L drehend antreibbar, wie mit dem gebogenen Pfeil angedeutet. Mittels einer ebenfalls nicht dargestellten Anpresseinrichtung kann eine Anpresskraft F in Richtung der Längsachse L auf die Spanneinrichtung 71 ausgeübt werden, wie mit dem Kraftpfeil eingezeichnet ist, und mit der die Fügefläche 28 eines eingespannten Zahnsegments 61 in Richtung der Längsasche L axial gegen die Fügefläche 28 des in die Spannvorrichtung 70 eingespannten Gewindesegments 35 angepresst werden kann. Die Fügeflächen 28 stehen dadurch in Reibkontakt miteinander.

Nach dem Einspannen wird das Spanneinrichtung 71 relativ zur Spanneinrichtung 70 positioniert, so dass das Gewindesegment 35 und das Zahnsegment 61 mit ihren Fügeflächen 28 gegeneinander anliegen, das Gewindesegment 35 axial an dem Widerlager 704 anliegt, und das Zahnsegment 61 an dem Druckstück 714 anliegt. Folglich ist der Gesamtabstand, der sogenannte Startabstand L1 zwischen dem Druckstück 714 und dem Widerlager 704 gleich der Summe der Segmentlängen Is und Iz, es gilt also: L1 = Is + Iz (Länge Is des Gewinde-segments 35 + Länge Iz des Zahnsegments 61).

Zum erfindungsgemäßen Reibschweißen wird die Spanneinrichtung 71 in Rotation versetzt, so dass die Fügeflächen 28 gegeneinander reibend relativ zueinander rotieren. Die dabei frei werdende Reibungswärme ist abhängig von der Rotationsgeschwindigkeit und der Anpresskraft F.

Zunächst wird zum Anreiben die Anpresskraft F in Höhe einer Anreibkraft F1 ausgeübt, welche beispielsweise zwischen 10kN bis 30 kN betragen kann. Dadurch erfolgt eine Vergleichmäßigung der Oberflächen der Fügeflächen 28. Das Anreiben kann für eine Zeitdauer von weniger als 3 Sekunden erfolgen.

Anschließend wird zum Wärmeeinbringungsreiben die Anpresskraft F auf eine Einbringungskraft F2 erhöht, die etwa das 5- bis 12-fache, bevorzugt das 6- bis 11-fache der Anreibkraft F1 betragen kann. Das Wärmemeinbringungsreiben erfolgt ausreichend lange, bis an den Fügeflächen 28 die gewünschte Prozesstemperatur zum Verschweißen von Stahl erreicht ist. Dabei kann eine feste Zeitdauer vorgegeben werden, oder es erfolgt eine Zeitregelung über die gemessene Temperatur. Zeitdauern von weniger als 15 Sekunden werden dabei bevorzugt eingehalten.

Beim Erreichen der Prozesstemperatur wird die Anpresskraft F auf das 10- bis 20-fache, bevorzugt das 17-fache der Anreibkraft F1 erhöht. Durch das zwischen den Fügeflächen 28 an der Fügestelle 27 aufschmelzende Material erfolgt eine Stauchung, bei der sich das Zahnsegment 61 und das Gewindesegment 35 unter Verformung an der Fügestelle 27 gegeneinander bewegen, so dass die Startlänge L1 verkürzt wird. Gemäß dem erfindungsgemäßen, weggesteuerten Verfahren wird nur eine definierte Verkürzung zugelassen, bis eine vorgegebene Ziellänge L2 erreicht wird. Die Verkürzung ist der sogenannte Fügeweg X, welcher der Differenz zwischen der Startlänge L1 und der Ziellänge L2 entspricht: X = L1 - L2.

Der Endzustand, bei dem die Gesamtlänge L2 erreicht ist, ist in Figur 27 dargestellt. Die Ziellänge L2 entspricht der Zahnstangen-Länge Z einer Zahnstange 2, wie sie beispielsweise in Figur 2 oder in Figur 41 gezeigt ist, wobei der Schaftabschnitt 24 eine gegenüber der Segmentlänge Is durch das Schweißen verkürzte Schaftabschnitt-Länge S hat, und der Verzahnungsabschnitt 21 eine Verzahnungsabschnitt-Länge V hat, die kürzer ist als die Segmentlänge Iz.

Beim Verschweißen ist an der Fügestelle 27 Material radial herausgequetscht worden und bildet einen umlaufenden Schweißwulst 271.

In Figur 28 ist schematisch ein Härteprofil dargestellt, welches durch das erfindungsgemäße Reibschweißen an der Fügestelle 27 erzeugt werden kann. Durch das Reibschweißen erfolgt ein zur Gefügeumwandlung des Stahls relevanter Wärmeeintrag in Richtung der Längsachse L bis in eine Wärmeeinflusszone 91 und 92 eines Schaftabschnitts 24 bzw. eines Verzahnungsabschnitts 21. Erfindungsgemäß werden die Schweißparameter wie Rotationsgeschwindigkeit und Anpresskraft F bevorzugt so vorgegeben, dass die Wärmeeinflusszonen 91 und 92 maximal auf 250° C erwärmt werden. Die Wärmeeinflusszonen 91 und 92 haben beim erfindungsgemäßen Verfahren bevorzugt eine maximale Breite von 0,25 x ds, wobei ds den Durchmesser eines Segments 21 bzw. 24 angibt.

Am stärksten ist die Erwärmung in dem radial außen liegenden Umfangsbereich in unmittelbarer Nachbarschaft zur Fügestelle 27. In diesem koaxial umlaufenden Randbereich 93 wird eine Aufhärtung gegenüber dem Grundmaterial von maximal 200 HV1 zugelassen. Für den Kernbereich 94, der sich zentral innerhalb des Randbereichs 93 befindet, wird eine Aufhärtung von maximal 250HV1 zugelassen. Dadurch, dass die Aufhärtung in dem Randbereich 93 geringer ist als im Kernbereich 94, wird die Bildung metallurgischer Kerben vermieden und eine höhere Belastbarkeit erreicht.

Mit Vorteil wird durch die Verfahrensführung eine Zahnstange für eine Kraftfahrzeuglenkung dargestellt, die aus zwei mittels Reibschweißen miteinander verbundenen Segmenten, beispielsweise einem Zahnsegment 61 oder Zahnsegment 63 mit einem Schaftsegment 62, gebildet ist, wobei in einem Abstand der größer als 0,3 multipliziert mit dem Segmentdurchmesser ds des Segmentes mit dem kleinerem Durchmesser, gemessen von der Mitte der Schweißnaht, die maximale Mikrohärte in der Längsachse L weniger als 200 HV1 größer ist als die Mikrohärte in der Längsachse in einem Abstand vom 1,5 fachen des Segmentdurchmessers ds des Segmentes mit dem kleineren Durchmesser. Bevorzugt beträgt die Vergrößerung der Härte weniger als 120 HV1.

Besonders bevorzugt ist es dabei, wenn in einem Abstand der größer als 0,3 multipliziert mit dem Segmentdurchmesser ds des Segmentes mit dem kleinerem Durchmesser, gemessen von der Mitte der Schweißnaht, die maximale Mikrohärte in der Oberfläche weniger als 250 HV1 größer ist als die Mikrohärte in der Oberfläche in einem Abstand vom 1,5 fachen des Segmentdurchmessers ds des jeweiligen Segmentes. Bevorzugt beträgt die Vergrößerung der Härte weniger als 180 HV1.

Figur 29 zeigt ein Zahnsegment 61 in perspektivischer Ansicht. Dieses weist Positionierelemente 220 auf, welche positions- und maßgenau relativ zu den Funktionsflächen der Verzahnung 22, des Rückens 23, der Fügefläche 28 oder dergleichen angeordnet ist. Die Positionierelemente 220 können beim Schmieden des Zahnsegments 61 auf einfache Weise mit ausgeformt werden. Weiterhin können die Positionierungselemente 220 durch geeignete Bearbeitungsverfahren wie Schleifen, Erodieren oder dergleichen als präzise Referenzflächen ausgebildet sein und hinsichtlich Form und Anordnung optimiert sein als Spannflächen zum Einspannen in einer Spannvorrichtung, beispielsweise von formschlüssig an- oder eingreifenden Spannelementen, wie die Spannelemente 701, 702, 703, 711, 712 oder 713 gemäß Figur 26 und 27.

Figur 30 zeigt eine Ausführung einer gebauten Zahnstange 20, welche einen Verzahnungsabschnitt 21 und einen damit als Schaftabschnitt verbundenen zweiten Verzahnungsabschnitt 213 aufweist. Der Verzahnungsabschnitt 21 und der Verzahnungsabschnitt 213 sind mittels Reibschweißen an der Fügestelle 27 verbunden. Sowohl der Verzahnungsabschnitt 21 als auch der Verzahnungsabschnitt 213 weisen eine Verzahnung auf, die durch mechanische Bearbeitung, beispielsweise durch Fräsen, eingebracht wurden sind. Es ist ebenfalls denkbar und möglich, einen Verzahnungsabschnitt mit gefräster Verzahnung mit einem geschmiedeten Verzahnungsabschnitt mittels Reibschweißen zu verbinden.

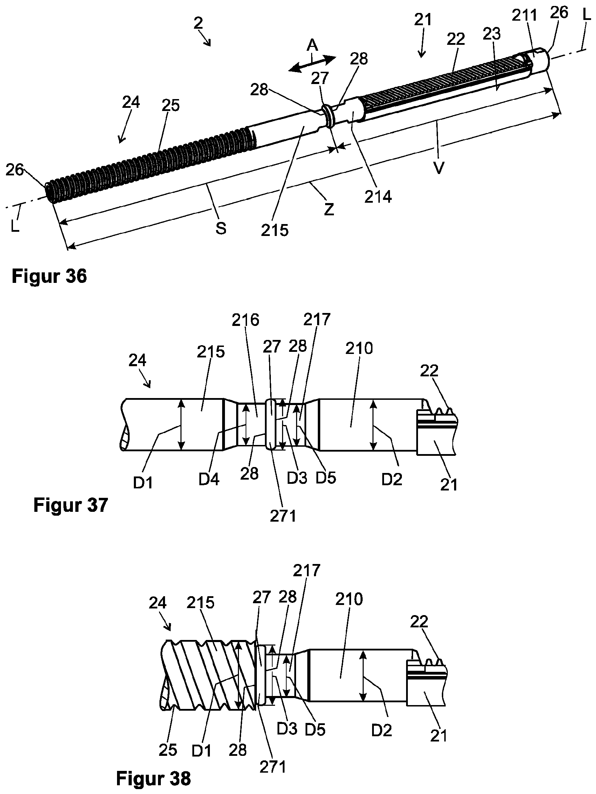

Die Figuren 36 und 37 zeigen eine erfindungsgemäß hergestellte Zahnstange in einer weiteren Ausführungsform. Die Zahnstange 2 weist einen Verzahnungsabschnitt 21 auf, der auf einer Seite mit einer Verzahnung 22 versehen ist, die sich in Längsrichtung A erstreckt. Weiterhin weist die Zahnstange 2 einen Schaftabschnitt 24 auf, der in dem in Figur 41 gezeigten Beispiel ein Gewinde 25 aufweist und auch als Gewindeabschnitt 24 bezeichnet wird. Der Verzahnungsabschnitt 21 weist einen Übergangsbereich 210 auf, der einen reduzierten Durchmesserabschnitt 217 am freien Ende des Übergangsabschnitts 210 umfasst. Der reduzierte Durchmesserabschnitt 214 weist einen kleineren Durchmesser D5 auf als der Übergangsabschnitt 210 mit dem Durchmesser D2. Der Schaftabschnitt 22 weist einen Übergangsbereich 215 auf, der einen reduzierten Durchmesserabschnitt 216 am freien Ende des Übergangsabschnitts 215 umfasst. Der reduzierte Durchmesserabschnitt 216 weist einen kleineren Durchmesser D4 auf als der Übergangsabschnitt 216 mit dem Durchmesser D1. Der Verzahnungsabschnitt 21 und der Schaftabschnitt 22 sind in einer Fügestelle 27 an ihren in axialer Richtung einander zugewandten Enden der reduzierten Durchmesserabschnitt 216, 217 mit ihren Fügeflächen 28 miteinander durch Reibschweißen verbunden. Beim Verschweißen ist an der Fügestelle 27 Material radial herausgequetscht worden und bildet einen umlaufenden Schweißwulst 271 mit dem Hüllkreisdurchmesser D3. Dieser Hüllkreisdurchmesser D3 der Schweißwulst 271 ist kleiner als der Durchmesser D1 des reduzierten Durchmesserabschnitts 216 und kleiner als der Durchmesser D2 des reduzierten Durchmesserabschnitts 214. Der Hüllkreisdurchmesser D3 ist größer als der Durchmesser D4 des reduzierten Durchmesserabschnitts 216 und größer als der Durchmesser D5 des reduzierten Durchmesserabschnitts. Dadurch, dass der Hüllkreisdurchmesser D3 kleiner ist als die Durchmesser D1, D2 ist eine mechanische Nacharbeit der Schweißwulst 217 nicht erforderlich, da die Schweißwulst 271 nicht radial weiter nach außen vorsteht als die Übergangsbereiche 210, 215.

In der Figur 38 ist eine alternative Ausführungsform einer Zahnstange 2 ähnlich den Figuren 41 und 42 in einer Detailansicht dargestellt. Der Hüllkreisdurchmesser D3 ist größer als der Durchmesser D5 des reduzierten Durchmesserabschnitts 217 und der Durchmesser D2 des Übergangsabschnitts 210 ausgebildet. Erfindungsgemäß ist der Hüllkreisdurchmesser D3 kleiner als der Durchmesser D1 des Übergangsbereichs 215 des Schaftabschnitts 24. Der Übergangsbereich 215 des Schaftabschnitts 24 weist das Gewinde 25 auf, welches sich in dieser Ausführungsform über die gesamte Länge des Schaftabschnitts 24 erstreckt. Der Übergangsbereich stellt somit den angrenzenden Abschnitt des Schaftabschnitts zur Fügestelle 27 dar. Dadurch, dass der Hüllkreisdurchmesser D3 der Schweißwulst 271 kleiner ist als der Durchmesser D1 des Übergangsbereichs 215, kann erreicht werden, dass die Schweißwulst 271 nicht störend radial nach außen hervor steht und somit ein zusätzliches Zerspanen der Schweißwulst 271 nicht erforderlich ist, da die Schweißwulst 271 erfindungsgemäß nicht weiter radial nach außen hervorsteht als der Übergangsbereich 215.

## Patentansprüche

1. Verfahren zur Herstellung einer Zahnstange (2) für ein Lenkgetriebe eines Kraftfahrzeugs, die mindestens einen Verzahnungsabschnitt (21) mit einer Verzahnung (22) und mindestens einen Schaftabschnitt (24) mit zumindest einem Gewindeabschnitt mit einem koaxialen Gewinde (25) aufweist, welches eine Gewindelänge in Richtung einer Längsachse (L) hat, wobei separate Segmente, umfassend zumindest ein jeweils stangenförmiges Zahnsegment (61) und ein Schaftsegment (62), bereitgestellt, auf einer gemeinsamen Längsachse (L) ausgerichtet und an einer Fügestelle (27) miteinander verbunden werden, **gekennzeichnet durch** die Schritte:
- Bereitstellen eines Schaft-Rohmaterialstücks (36) mit einer Stücklänge (G) von einem Mehrfachen der Schaftsegmentlänge (Is),
- Erzeugen eines in Längsrichtung durchgehenden Gewindes (25) auf dem Schaft-Rohmaterialstück (36) über ein Mehrfaches der Gewindelänge zur Herstellung eines Gewinde-Halbzeugs (37),
- Ablängen eines Gewindesegments (62) von dem Gewinde-Halbzeug (37),
- Bereitstellen eines Zahnsegments (61),
- Fügen des Gewindesegments (62) mit dem Zahnsegment (61).

2. Verfahren nach Anspruch 1, **dadurch gekennzeichnet, dass** auf dem Schaft-Rohmaterialstück (36) das Gewinde (25) in einem kontinuierlichen axialen Durchlaufverfahren erzeugt wird.

3. Verfahren nach Anspruch 2, **dadurch gekennzeichnet, dass** das Gewinde (25) gewirbelt wird.

4. Verfahren nach einem der vorangehenden Ansprüche, **dadurch gekennzeichnet, dass** das Gewinde (25) zumindest eine Kugellaufbahn eines Kugelgewindetriebs (KGT) aufweist.

5. Verfahren nach einem der vorangehenden Ansprüche, **dadurch gekennzeichnet, dass** das Schaftabschnitt-Rohmaterialstück (36) als warm- und/oder kaltgeformter und/oder spanend bearbeiteter Materialabschnitt bereitgestellt wird.

6. Verfahren nach einem der vorangehenden Ansprüche, **dadurch gekennzeichnet, dass** das Schaftabschnitt-Rohmaterialstück (36) als Stange oder Rohr bereitgestellt wird, bevorzugt als Rundmaterial.

7. Verfahren nach einem der vorangehenden Ansprüche, **dadurch gekennzeichnet, dass** das Schaftabschnitt-Rohmaterialstück (36) vor dem Einbringen des Gewindes (25) thermisch behandelt wird.

8. Verfahren nach einem der vorangehenden Ansprüche, **dadurch gekennzeichnet, dass** durch das Ablängen zumindest eine stirnseitige Endfläche des Schaftsegments (62) zur Ausbildung einer Fügefläche (28) bereitgestellt wird.

9. Verfahren nach einem der vorangehenden Ansprüche, **dadurch gekennzeichnet, dass** das Zahnsegment (61) und das Schaftsegment (62) miteinander verschweißt werden.

10. Verfahren nach einem der vorangehenden Ansprüche, **dadurch gekennzeichnet, dass** der Funktionsabschnitt einen weiteren Zahnstangenabschnitt (213) und/oder einen Gewindeabschnitt (24) und/oder einen Verbindungsabschnitt umfasst.

11. Verfahren nach einem der vorangehenden Ansprüche, **dadurch gekennzeichnet, dass** zumindest ein weiteres Funktionssegment bereitgestellt und mit dem Zahnsegment (61) und/oder dem Schaftsegment (62) gefügt wird.

12. Zahnstange (2) für ein Lenkgetriebe eines Kraftfahrzeugs, die mindestens einen Verzahnungsabschnitt (21) mit einer Verzahnung (22) und mindestens einen Schaftabschnitt (24) mit einer Schaftabschnitts-Länge S mit einem Gewinde (25) aufweist, **dadurch gekennzeichnet, dass** sich das Gewinde über die gesamte Schaftabschnitts-Länge S erstreckt.

13. Zahnstange nach Anspruch 12, **dadurch gekennzeichnet, dass** das durchgehende Gewinde eine Steigung zwischen 5mm und 40mm aufweist.

## Claims

1. Method for producing a rack (2) for a steering gear of a motor vehicle, said rack (2) having at least one toothed portion (21) having a toothing (22), and at least one shaft portion (24) having at least one threaded portion having a coaxial thread (25) which has a thread length in the direction of a longitudinal axis (L), wherein separate segments comprising at least one in each case bar-shaped toothed segment (61) and one shaft segment (62) are provided, are aligned on a common longitudinal axis (L), and are connected to one another at a joint (27), **characterized by** the steps:
- providing a shaft raw material piece (36) having a piece length (G) of a multiple of the shaft segment length (Is);
- generating a thread (25) that is continuous in the longitudinal direction on the shaft raw material piece (36) across a multiple of the thread length, in order for a threaded semi-finished product (37) to be produced;
- cutting-to-length a threaded segment (62) from the threaded semi-finished product (37);
- providing a toothed segment (61);
- joining the threaded segment (62) to the toothed segment (61).

2. Method according to Claim 1, **characterized in that** the thread (25) on the shaft raw material piece (36) is generated in a continuous axial throughput method.

3. Method according to Claim 2, **characterized in that** the thread (25) is whirled.

4. Method according to one of the preceding claims, **characterized in that** the thread (25) has at least one ball raceway of a ball screw drive.

5. Method according to one of the preceding claims, **characterized in that** the shaft portion raw material piece (36) is provided as a hot-formed and/or cold-formed and/or subtractively machined material portion.

6. Method according to one of the preceding claims, **characterized in that** the shaft portion material piece (36) is provided as a rod or tube, preferably as a round material.

7. Method according to one of the preceding claims, **characterized in that** the shaft portion raw material piece (36) is thermally treated prior to the thread (25) being incorporated.

8. Method according to one of the preceding claims, **characterized in that** by the cutting-to-length at least one end-side end face of the shaft segment (62) is provided in order for a joining face (28) to be configured.

9. Method according to one of the preceding claims, **characterized in that** the toothed segment (61) and the shaft segment (62) are welded to one another.

10. Method according to one of the preceding claims, **characterized in that** the functional portion comprises a further rack portion (213) and/or a threaded portion (24) and/or a connection portion.

11. Method according to one of the preceding claims, **characterized in that** at least one further functional segment is provided and is joined to the toothed segment (61) and/or the shaft segment (62).

12. Rack (2) for a steering gear of a motor vehicle, said rack (2) having at least one toothed portion (21) having a toothing (22), and at least one shaft portion (24) having a shaft portion length S having a thread (25), **characterized in that** the thread extends across the entire shaft portion length S.

13. Rack according to Claim 12, **characterized in that** the continuous thread has a pitch between 5 mm and 40 mm.

## Revendications

1. Procédé de fabrication d'une crémaillère (2) pour un mécanisme de direction d'un véhicule automobile, comportant au moins une partie dentée (21) munie d'une denture (22) et au moins une partie tige (24) munie d'au moins une partie filetée avec un filetage coaxial (25) qui présente une longueur de filetage dans la direction d'un axe longitudinal (L), dans lequel des segments séparés, qui comprennent au moins un segment denté (61) respectivement en forme de barre et un segment tige (62), sont fournis, alignés sur un axe longitudinal commun (L) et reliés ensemble en un point d'assemblage (27), **caractérisé par** les étapes consistant à :
- fournir une pièce de matière première de tige (36) d'une longueur de pièce (G) d'un multiple de la longueur de segment tige (ls),
- produire un filetage (25) continu dans la direction longitudinale sur la pièce de matière première de tige (36) sur un multiple de la longueur de filetage pour fabriquer un produit semi-fini fileté (37),
- couper à longueur un segment fileté (62) du produit semi-fini fileté (37),
- fournir un segment denté (61),
- assembler le segment fileté (62) au segment denté (61).

2. Procédé selon la revendication 1, **caractérisé en ce que** le filetage (25) est produit sur la pièce de matière première de tige (36) dans un procédé en continu axial.

3. Procédé selon la revendication 2, **caractérisé en ce que** le filetage (25) est tourbillonné.

4. Procédé selon l'une quelconque des revendications précédentes, **caractérisé en ce que** le filetage (25) comporte au moins un chemin de roulement à billes d'une vis d'entraînement à billes (KGT).

5. Procédé selon l'une quelconque des revendications précédentes, **caractérisé en ce que** la pièce de matière première de partie de tige (36) est fournie sous la forme d'une partie de matière façonnée à chaud et/ou façonnée à froid et/ou usinée par enlèvement de copeaux.

6. Procédé selon l'une quelconque des revendications précédentes, **caractérisé en ce que** la pièce de matière première de partie de tige (36) est fabriquée sous forme de barre ou de tuyau, de préférence sous forme de matériau rond.

7. Procédé selon l'une quelconque des revendications précédentes, **caractérisé en ce que** la pièce de matière première de partie de tige (36) subit un traitement thermique avant l'introduction du filetage (25).

8. Procédé selon l'une quelconque des revendications précédentes, **caractérisé en ce que** la découpe à longueur fournit au moins une surface d'extrémité frontale du segment tige (62) pour réaliser une surface d'assemblage (28).

9. Procédé selon l'une quelconque des revendications précédentes, **caractérisé en ce que** le segment denté (61) et le segment tige (62) sont soudés ensemble.

10. Procédé selon l'une quelconque des revendications précédentes, **caractérisé en ce que** la partie fonctionnelle comprend une partie de crémaillère supplémentaire (213) et/ou une partie de filetage (24) et/ou une partie de raccordement.

11. Procédé selon l'une quelconque des revendications précédentes, **caractérisé en ce qu'**au moins un segment fonctionnel supplémentaire est fourni et assemblé au segment denté (61) et/ou au segment tige (62).

12. Crémaillère (2) pour un mécanisme de direction d'un véhicule automobile comportant au moins une partie dentée (21) munie d'une denture (22) et au moins une partie tige (24) d'une longueur de partie tige S avec un filetage (25), **caractérisée en ce que** le filetage s'étend sur toute la longueur de partie tige S.

13. Crémaillère selon la revendication 12, **caractérisée en ce que** le filetage continu présente un pas entre 5 mm et 40 mm.
